(19)

Europäisches
Patentamt
European
Patent Office
Office européen
des brevets

(11)  **EP 2 216 775 B1**

(12)  **EUROPEAN PATENT SPECIFICATION**

(45) Date of publication and mention
of the grant of the patent:
**21.11.2012  Bulletin 2012/47**

(51) Int Cl.:
***G10L 17/00*** *(2006.01)*     ***G10L 15/06*** *(2006.01)*

(21) Application number: **09001624.7**

(22) Date of filing: **05.02.2009**

(54) **Speaker recognition**

Sprechererkennung

Reconnaissance vocale

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**11.08.2010  Bulletin 2010/32**

(73) Proprietor: **Nuance Communications, Inc.
Burlington, MA 01803 (US)**

(72) Inventors:
• **Herbig, Tobias
89075 Ulm (DE)**
• **Gerl, Franz, Dr.
89233 Neu-Ulm (DE)**

(74) Representative: **Bertsch, Florian Oliver et al
Kraus & Weisert
Patent- und Rechtsanwälte
Thomas-Wimmer-Ring 15
80539 München (DE)**

(56) References cited:
**EP-A1- 2 048 656        US-A1- 2003 171 931
US-A1- 2003 187 645     US-B1- 6 519 561**

• **SHOU-CHUN YIN ET AL: "Adaptive score
normalization for progressive model adaptation
in text independent speaker verification"
ACOUSTICS, SPEECH AND SIGNAL
PROCESSING, 2008. ICASSP 2008. IEEE
INTERNATIONAL CONFERENCE ON, IEEE,
PISCATAWAY, NJ, USA, 31 March 2008
(2008-03-31), pages 4857-4860, XP031251687
ISBN: 978-1-4244-1483-3**
• **KWON S ET AL: "Unsupervised Speaker Indexing
Using Generic Models" IEEE TRANSACTIONS ON
SPEECH AND AUDIO PROCESSING, IEEE
SERVICE CENTER, NEW YORK, NY, US, vol. 13,
no. 5, 1 September 2005 (2005-09-01), pages
1004-1013, XP011137547 ISSN: 1063-6676**

## Description

The present invention relates to a method of recognizing a speaker of an utterance in a speech recognition system, and in particular to a method of recognizing a speaker which uses a number of trained speaker models in parallel. The invention further relates to a corresponding speech recognition system.

Background

Recently, a wide variety of electronic devices are being equipped with a speech recognition capability. The devices may implement a speaker independent or a speaker adapted speech recognition system. With a speaker adapted system, higher recognition rates are generally achieved, the adaptation of a speaker model requires the user to speak a certain number of predetermined sentences in a training phase. Such a training phase is inconvenient for a user and often impractical, for example in an automotive environment where a new user wants to give a voice command without delay. Further, plural users may use the speech recognition system, and accordingly, the system has to use the correct speaker adaptation. It is thus desirable to automatically recognize the speaker of an utterance in a speech recognition system. Further, it is desirable that the system quickly adapts to a new speaker if the speaker changes.

DE 10 209 324 C1 describes a method for fast speaker adaptation in a speech recognition system. Plural speaker dependent models or codebooks are used in parallel to a standard codebook. By using the standard codebook, a list of the n-best matching normal distributions is determined. On the same set of normal distributions, the likelihood of the speaker dependent codebooks is approximated and the inverse is used as a means for determining a speaker change.

Further, systems are known in the art which use Hidden Markov Models for combining a speaker change and speaker dependent emission probabilities in a statistical model. Each state of the Hidden Markov Model (HMM) corresponds to a speaker, and each emission probability distribution corresponds to a classical Gaussian Mixture Model (GMM). The probability of a speaker change is then modelled by a Bayesian Information Criterion (BIC). Further, systems are known which use Neutral Networks (NNs) which are trained for being capable of distinguishing different speakers.

A problem of these systems is that they are configured for a predetermined number of speakers. If another speaker is to be added, the whole system needs to be retrained. For training the system, utterances of all speakers have to be available. Such an approach is generally not practical. Further, if a new speaker is added to a speech recognition system using different codebooks adapted to different speakers, the new codebook for the new speaker is on a different training level. The inventors of the present invention have recognized that by comparing likelihood scores obtained for the classification of feature vectors of an utterance on differently trained codebooks, the reliability of the speaker recognition is greatly reduced. By using the currently available methods, the speaker of an utterance cannot reliably be determined if codebooks of different training states are used. The distinction of different speakers is particularly difficult if the codebooks for new speakers originate from the same standard codebook.

For improving the recognition rate of a speech recognizer, it is desirable that the speech recognition system reliably recognizes a registered speaker and is capable of adapting to a new speaker. To improve the recognition rate, it is further desirable to adapt speaker specific codebooks to the speaker during the runtime of the system. Further, the speech recognition system should run in real time and should not require to run a separate speaker recognition algorithm, i.e. it is desirable to integrate speech recognition and speaker recognition. First recognizing a speaker of an utterance and then recognizing the utterance itself leads to an undesirable delay. Accordingly, if an utterance is decoded, a first estimation of the identity of the speaker is necessary to use the correct codebook for decoding. As such an estimation may be rather inaccurate, a fast change of the codebook used for decoding should be allowed. It is further desirable to adapt the extraction of feature vectors from the utterance to the speaker of the utterance, which requires a more reliable estimate of the originator of the utterance. To further improve the speech recognition performance of the system, it is desirable to perform a training of the speaker models or codebooks, i.e. to further adapt the codebook to the corresponding speaker. If the training of the codebook is performed on an utterance originating from another speaker, the speech recognition performance of the system will deteriorate. Accordingly, it is important to recognize the speaker of an utterance with a high confidence.

SHOU-CHUN YIN ET AL. : "Adaptive score normalization for progressive model adaptation in text independent speaker verification" ACOUSTICS, SPEECH AND SIGNAL PROCESSING, 2008. ICASSP 2008. IEEE INTERNATIONAL CONFERENCE ON, IEEE, PISCATAWAY, NJ, USA, 31 March 2008 (2008-03-31), pages 4857-4860, XP031251687 ISBN: 978-1-4244-1483-3 describes a method for recognizing a speaker according to the preamble of claim 1.

Summary

There is a need for providing an improved method of recognizing a speaker, which is capable of reliably recognizing a speaker.

According to a first aspect of the invention, a method of recognizing a speaker of an utterance in a speech recognition system is provided according to claim 1. The method comprises the steps of comparing the utterance to a plurality of speaker models for different speakers, determining a likelihood score for each speaker model, the likelihood score indicating how well the speaker model corresponds to the utterance, and, for each speaker model, determining a probability that the utterance originates from the speaker corresponding to the speaker model. The determination of the probability for a speaker model is based on the likelihood scores for the speaker models and takes a prior knowledge about the speaker model into account.

Such a prior knowledge may for example be a probability of the codebook generating a certain likelihood score if the speaker corresponding to the speaker model is or is not the originator of the utterance. As the probability not only considers the comparison between the utterance and the speaker model, but also the prior knowledge, it is a better measure for determining the originator of the utterance. By using the probability instead of the likelihood score, the originator of the utterance can more reliably be determined. The originator may be determined as the speaker corresponding to the speaker model being associated with the highest probability.

According to the invention, the prior knowledge for a particular speaker model comprises at least an expected distribution of likelihood scores for a training state of the speaker model. The likelihood score distribution for the training state may for example be an average distribution for different speaker models of the same training state. The use of a distribution of likelihood scores expected for the particular speaker model in the determination of the probability for the speaker model may yield even more reliable probabilites. The determination of the probability for a particular speaker model may also consider the training states of all other speaker models.

Taking the prior knowledge into account comprises retrieving of the distribution of likelihood scores expected for the training state of the speaker model and comparing the determined likelihood score to the retrieved likelihood score distribution expected for the training state of the speaker model. A probability may thus be obtained indicating how likely it is that the speaker model attracts a certain likelihood score if the corresponding speaker was the originator of the utterance. That way, the training state of the speaker model can be considered when determining the probability and the speaker can be recognized more reliably.

The distribution of likelihood scores expected for the training state may be estimated by a multilayer perceptron trained on likelihood score distributions obtained for different training states of speaker models, wherein the multilayer perceptron returns parameters of a distribution of likelihood scores for the given particular training state. The distribution may for example be a normal distribution which is characterized by a mean value ($\mu$) and a variance ($\Sigma$). These parameters may for example be returned by the multilayer perceptron (MLP), when it receives the training state as an input. Using the known distribution, which indicates how probable it is to obtain a particular likelihood score for speaker model of the given training state, the likelihood score determined for the utterance can easily be converted into a probability.

According to another embodiment, taking the prior knowledge into account comprises estimating a distribution of likelihood scores expected for the particular speaker model or for the gender of the speaker corresponding to the speaker model and comparing the likelihood score determined for the speaker model to the likelihood score distribution expected for said speaker model. The likelihood score distribution may for example be a normal distribution characterized by the mean or average $\mu$ or the variance $\Sigma$, which can be characteristic for a particular speaker. By comparing the obtained likelihood score to such a distribution, the probability for the speaker model can reliably be determined. It should be clear that information on the likelihood score distribution expected for particular speaker and expected for the training state of the model can be combined, for example by providing a distribution for each speaker model for a particular training state. Likelihood score distributions characteristic to a particular gender may also be employed. Even in difficult situations, e.g. when microphones used to record the utterance are changed, a reliable speaker identification is thus still enabled.

The estimation of the distribution of likelihood scores may further consider at least one of a length of the utterance and a signal to noise ratio of the utterance. These factors may cause a change of the absolute likelihood score determined for a speaker model for the utterance, and taking them into account can thus improve the accuracy of the determined probability.

In more detail, the determining of the probability for a particular speaker model may be performed as follows. The likelihood score for the speaker model under consideration may be compared to a distribution of likelihood scores for the particular speaker model expected in case that the speaker under consideration is the originator of the utterance, the distribution of likelihood scores being determined based on said prior knowledge. Further, the likelihood scores for the remaining speaker models may each be compared to a distribution of likelihood scores expected in case that the remaining speaker is not the originator of the utterance, the distribution of likelihood scores for the remaining speakers being again based on the prior knowledge. The probability for the particular speaker model may then be determined based on both comparisons. By also considering a likelihood distribution expected for the remaining or "competing" speakers, a precise determination of the probability can be achieved. Accordingly, two likelihood score distributions can be provided for each speaker model as prior knowledge, one indicating the likelihood scores expected for the speaker model being the actual speaker (assumed speaker), and one for the speaker model not being the actual speaker (competing speakers). If the assumed speaker is not the actual speaker of the utterance, a low probability will thus be obtained, whereas if the assumed speaker is the actual speaker, a high probability will be obtained. It should be clear that for the same training state of a number of speaker models, only one likelihood score distribution may be provided for each of the assumed speaker case and another one for the competing speaker case. It is also possible to provide two distributions for each individual speaker model.

The determination of the probability for a speaker model may further consider a transition probability for a transition between the corresponding speaker to a speaker of a preceding and/or subsequent utterance. Such a transition probability can be particularly useful when used for determining a sequence of speakers. It can be used for fine-tuning the system, i.e. by making it more stable by enabling fewer speaker changes, or by enabling a faster adaption by allowing more frequent speaker transitions. Such a transition probability may further be used to consider external information. The transition probability may for example consider at least one of a change of a direction from which successive utterances originate, a shut-down or restart of the speech recognition system between successive utterances, a time lag of adjacent utterances, a detected change of a user of the speech recognition system and the like. The direction from which an utterance is recorded may for example be determined by using a beamforming microphone array. If the direction changes, it is likely that the speaker also changes, which may be considered in the transition probability. If the speech recognition system is for example installed in a vehicle, a driver change is likely after a shut-down of the vehicle and the speech recognition system, which may again be considered in the transition probability.

The determination of the likelihood score for a speaker model for the utterance may be based on likelihood scores of a classification of feature vectors extracted from the utterance on the speaker model, wherein the classification result for at least one speaker model may be used in a subsequent speech recognition step. Accordingly, a parallel processing of the utterance for speech recognition and speaker recognition can be avoided. Information obtained from the feature vector classification step of the speech recognition may also be used for the speaker recognition. The speaker models may for example be codebooks comprising multivariate normal distributions for the classification of feature vectors of an utterance (also called feature vector quantisation).

As an example, the utterance may be processed continuously, with the classification result of the speaker model yielding the highest average likelihood score for a predetermined number of feature vectors being supplied to the speech recognition step. A moving average may for example be used to average a certain number of logarithmic likelihood scores for each speaker model. The result of the speaker model with the highest average can then be used for the speech recognition step. A fast change between speaker models or codebooks during speech recognition can thus be realized, resulting in an improved speech recognition.

According to a further embodiment, the utterance may be part of a sequence of utterances, wherein the probability is determined for each utterance in the sequence, the method further comprising a determining of a sequence of speakers having the highest probability of corresponding to the sequence of utterances, the determination being based on the probabilities determined for the speaker models for the utterances. Each probability for a speaker model for an utterance may further consider a transition probability for a transition to a speaker of a preceding utterance and/or a speaker of a subsequent utterance. By using such an approach, the actual speaker of an utterance can more reliably be determined, as not only the probability determined for an utterance is taken into account, but also transitions between speakers of the preceding and/or subsequent utterance. As mentioned above, the transition probability may consider external information.

The most probable sequence of speakers corresponding to the sequence of utterances may be determined by using a Viterbi search algorithm based on the probabilities determined for the speaker models for the utterances. Yet it is also possible to use a forward-background decoding algorithm to determine the most probable sequence of speakers corresponding to the sequence of utterances. It should be clear that other algorithms, such as a simple forward decoding, or simple backward decoding, or any other suitable algorithm may be used as well.

The method may further comprise a step of using an utterance of the sequence of utterances to train the speaker model of the speaker in the sequence of the speakers corresponding to the respective utterance. Such an automated training of the speaker models should only be performed if the speaker of an utterance can be determined with high confidence, as the speaker models may otherwise deteriorate. As the determining of the speakers based on a sequence of utterances achieves a high reliability, such a training is rendered possible. Training may for example occur by adapting multivariate distributions of a codebook corresponding to the speaker model to the respective utterance. The training may for example be performed after the sequence of speakers is determined for a predetermined number of successive utterances. Performing the training only after a delay of several utterances ensures that speaker models are trained with utterances of the correct speaker. The training may also directly occur if the probability for a speaker model for an utterance exceeds a predetermined threshold value. The probability itself may thus already indicate a high confidence in speaker identification, and the utterance may thus directly be used for speaker model training. On the other hand, even if a speaker of an utterance is determined based on a sequence of utterances, a training may not be performed if the corresponding probability is below a certain threshold value. An automatic training and improvement of the speaker models can thus be achieved.

The comparing of the utterance to a plurality of speaker models may comprise an extraction of feature vectors from the utterance, wherein the method may further comprise the step of adapting the feature vector extraction in accordance with the speaker model for which the highest probability is determined. The adaptation of the feature vector extraction can be made more reliable if it is based on the probability, and not on the likelihood scores. As an example, the mean value normalization and the energy/power determination may be adapted.

The plurality of speaker models may comprise a standard (i.e. a speaker independent) speaker model, wherein the determination of the speaker model probabilities for the utterance may be based on likelihood scores for the speaker models normalized by a likelihood score for the standard speaker model. Normalization of the absolute likelihood values by the likelihood value for the standard speaker model may reduce statistic correlations between the speaker models. Such correlations may occur as the speaker models may be derived by adapting the standard speaker model. Compensating these statistic dependencies has the advantage that the probability can more reliably be determined.

According to a further embodiment, the utterance is part of a sequence of utterances, and said probability is determined for each utterance in said sequence. The method may then further comprise the determining of a probability for each utterance for an unregistered speaker for which no speaker model exists, the probability being calculated by assuming that none of the speakers of the speaker models originated the utterance, and the determining of a sequence of speakers having the highest probability of corresponding to the sequence of utterances, the determination being based on the probabilities determined for the utterances for the speaker models and for the unregistered speaker. A new speaker model is generated for the unregistered speaker if the unregistered speaker is comprised in the sequence of speakers. As an example, the probability for the unregistered speaker may be determined by comparing the likelihood scores for the existing speaker models with likelihood score distributions for the "competing speaker" case. If all these comparisons achieve high probabilities, this may indicate that none of the speakers of the registered speaker models is actually the originator of the recorded utterance. The probability is then considered in the determination of the sequence of speakers, which may accordingly comprise the unregistered speaker. By basing the detection of a new speaker on a sequence of utterances, a new speaker can reliably be detected, and an unnecessary or excessive creation of new speaker models can be prevented.

Other possibilities of making a decision regarding the creation of a new speaker model exist. If the likelihood scores for the speaker models are below a predetermined threshold value, a new speaker model may be generated. On the other hand, a new speaker model may be generated if normalized likelihood scores for the speaker models are below the threshold value.

The plurality of speaker models may comprise for at least one speaker different models for different environmental conditions. The generation of new codebooks may for example be allowed for the same speaker for different environmental conditions. These may occur if the speech recognition system is provided in a portable device, which may e.g. be operated inside a vehicle, outside a vehicle and in a noisy environment. Using these additional speaker models has the advantage that the feature vector extraction and the feature vector classification can be adapted to the particular environmental conditions, resulting in a higher speech recognition accuracy.

According to another aspect of the present invention, a speech recognition system adapted to recognize a speaker of an utterance is provided according to claim 20.

According to an embodiment, the speech recognition system is adapted to perform one of the methods mentioned above.

According to a further aspect of the invention, a computer program product that can be loaded into the internal memory of a computing device is provided, said product comprising software code portions for performing one of the above mentioned methods when the product is executed. The computer program product may be provided on a data carrier. According to a further aspect, an electronically readable data carrier with stored electronically readable control information is provided, the control information being configured such that when using the data carrier in a computing device, the control information performs one of the above mentioned methods. The computing device may for example be a portable or stationery electronic device comprising the speech recognition system.

It is to be understood that the features mentioned above and those yet to be explained below can be used not only in the respective combinations indicated, but also in other combinations or in isolation, without leaving the scope of the present invention.

Brief description of the drawings

The foregoing and other features and advantages of the invention will become further apparent from the following detailed description read in conjunction with the accompanying drawings. The detailed description and the drawings are merely illustrative of the invention rather than limiting. In the drawings, like reference numerals refer to like elements.

Fig. 1 is a flow-diagram giving an overview of a method according to an embodiment of the invention.

Fig. 2 is a flow-diagram illustrating step 100 of Fig. 1 in more detail.

Fig. 3 is a flow-diagram illustrating step 200 of Fig. 1 in more detail.

Fig. 4 is a flow-diagram illustrating step 300 of Fig. 1 in more detail.

Fig. 5 is a flow-diagram illustrating the creation of a new codebook for a previously unregistered speaker.

Fig. 6 is a schematic diagram illustrating the determination of a probability for a speaker model for a given utterance, in the method according to the embodiment of Fig. 1.

Fig. 7 is a diagram illustrating a correlation coefficient for a correlation between the training state of a speaker model for an assumed speaker and the training state of a speaker model for a competing speaker.

Fig. 8 shows two diagrams for likelihood score distributions expected for different training states of speaker models, with one diagram giving the distributions expected for competing speakers and the other diagrams giving the distributions expected for an assumed speaker.

Fig. 9 is a diagram illustrating the shift of the mean value of the likelihood score distribution with an increasing training state of the speaker model for a competing speaker and for an assumed speaker.

Fig. 10 is a diagram illustrating the change in variance of the expected likelihood score distributions for an assumed speaker and a competing speaker.

Fig. 11 is a schematic diagram illustrating a Viterbi search for finding a most probable sequence of speakers.

Fig. 12 is a functional block diagram schematically illustrating a speech recognition system according to an embodiment of the invention.

## Detailed description

The present invention aims at providing a method which enables a speaker recognition based on a variable number of speaker models in different training states. Further, it should allow the determination of a posteriori probability for each speaker at each point in time. The present invention recognizes that the logarithm of likelihood scores for speaker models for a particular utterance strongly depends on the training status of the speaker model. A conventional comparison of likelihood scores, such as in the maximum likelihood method, does not comprise any information about the confidence of the result of the comparison, as for differently trained speaker models, likelihood differences have to be interpreted differently. As the user adapted speaker models may be derived from the same original standard speaker model, the likelihood values obtained for untrained speaker models will derive less from the standard model than for well trained models.

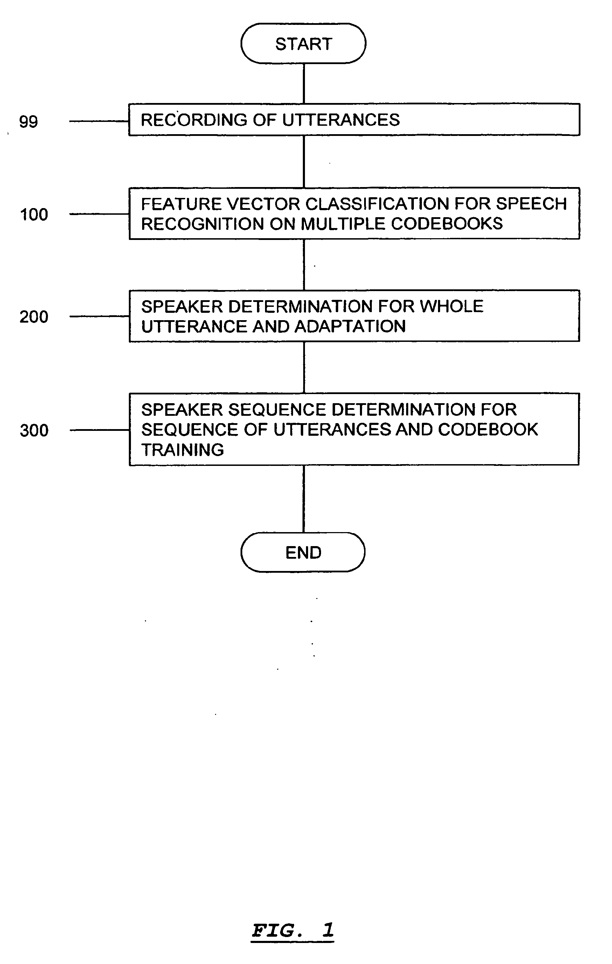

Further, the speaker identification should be integrated into the speech recognition and it should be possible to run the system in real time. This is achieved by the present invention by providing a speaker recognition on different time scales with different levels of confidence. The processing steps and performance required for speech recognition can be reduced by integrating the speaker recognition into the speech recognition, and not running it in parallel. The different time scales are indicated as steps 100, 200 and 300 in the embodiment of Fig. 1.

In a first step 99 an utterance is recorded and converted into a digital format, e.g. by using a microphone and a standard analogue to digital converter for a sound signal. On a short time scale, a classification of feature vectors extracted from the utterance is performed for enabling a speech recognition on multiple codebooks, i.e. plural speaker models are used in parallel (step 100). A first estimation of the identity of the speaker is used to select the correct codebook for decoding the utterance. As only after processing of the utterance, the speaker can be recognized with a high confidence, a fast change of the codebook used for decoding has to be enabled while processing the utterance. A fast estimation of the identity of the speaker is achieved by performing a first order recursion of the likelihood scores of the individual codebooks. Therefore, each feature vector extracted from the utterance is compared to the codebooks available and an approximation of the likelihood is determined for the current point in time. For the first estimation of the speaker identity, not the whole utterance is considered, but only an average over the scores of a certain number of feature vectors. This may be a moving average or a weighted average. Thereby, it can be prevented that at each time point, i.e. for each feature vector, a different codebook is selected. Still, a fast change between two different codebooks can be achieved.

In step 200, the identity of the speaker is determined based on the whole utterance, and an adaption of the feature vector extraction is performed. As in this point of time, all feature vectors of the utterance are available, and a more reliable estimation of the identity of the speaker is possible as while the utterance is still being decoded. The speaker identification may for example be based on the sum of the logarithms of the likelihood scores of all feature vectors of the utterance, which were used for decoding the utterance. Speaker dependent properties of the feature vector extraction may then be adjusted in accordance with the identified speaker, e.g. a mean value or an energy normalization.

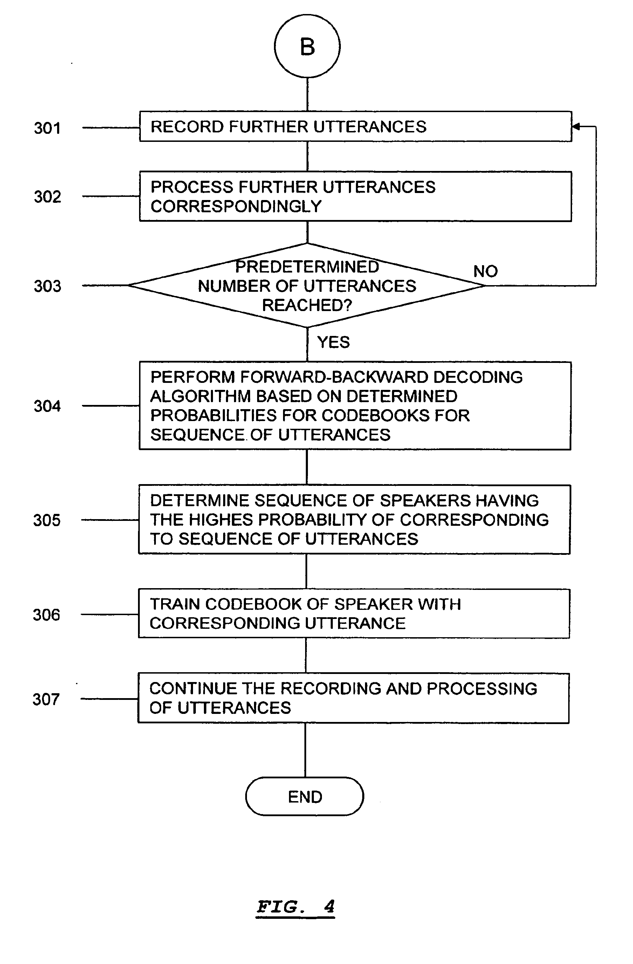

In step 300, a processing on a third time scale spanning several utterances is performed, the processing comprising a determination of a sequence of speakers corresponding to a recorded sequence of utterances, and the training of the speaker models, i.e. the codebooks. On this time scale, the utterances may further be used for creating new codebooks or adapting existing codebooks. Errors in the adaptation of the codebooks can have consequences regarding the stability of the speaker identification in the speech recognition system. An incorrect adaptation can result in the mixing of speaker models and accordingly, different speakers can no longer be separated. As for these purposes, the identification of the correct speaker is critical, it is advantageous to base the decision for particular speaker on plural utterances. Further, external information can be integrated at this stage, such as information from a beamforming microphone system, a restart of the speech recognition system, the time lag of adjacent utterances and other external knowledge or available information. The determination of the sequence of speakers is further not based on likelihood scores in the present invention, but on probabilities determined for the different speaker models. It thus becomes possible to account for different training states of the speaker models, as well as for individual speakers or environmental situations. By tuning the transition probabilities, the frequency of speaker changes can be limited. The most probable sequence of speakers can be found by using a Viterbi search algorithm, or a forward-backward decoding as described in more detail with respect to Fig. 4. Utterances, for which the speaker has been identified with a high confidence can then be used for training the corresponding speaker model or codebook.

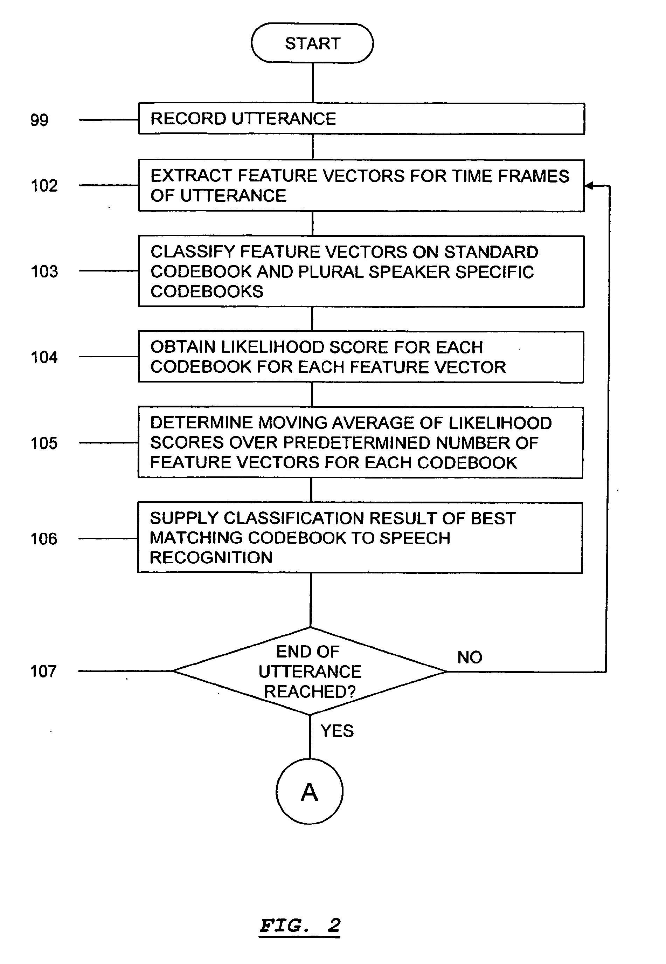

Fig. 2 describes step 100 of the embodiment of Fig. 1 in more detail. After the recording of the utterance in step 99, the utterance is divided into time frames of e.g. ten milliseconds and a feature vector is determined for each time frame in step 102. Characteristic features of the utterance are extracted from the time frame and stored in vector form. For obtaining the feature vector, the time frames, which may overlap, can be transformed by using a Fast Fourier Transformation (FFT) or a Short Time Fourier Transformation (STFT). Further, a noise reduction by Speech Signal Enhancement (SSE) can be performed, for which a Wiener-filter and an estimation of the undisturbed spectrum of the speech may be employed. The powers of the spectrum obtained may then be mapped onto a Mel-Scale. The powers of neighbouring frequency bands are added and the logarithm is taken, and the results are decorrelated by a Discrete Cosine Transform (DCT). Amplitudes of the resulting spectrum are the Mel Frequency Cepstral Coefficients (MFCCs), which can be written as feature vectors $x_t$, with a dimension d and a time index t. It should be clear that other methods known in the art for extracting feature vectors from an utterance may be used. For the present invention, it is not important how the feature vectors are extracted.

In the next step 103, the feature vectors are classified on a standard codebook and on plural speaker specific codebooks. The speaker specific codebooks may for example be obtained by adapting the standard codebook to a particular speaker. A codebook can be realized by a Gaussian Mixture Model (GMM). GMMs are particularly well suited in the present context, as they have beneficial properties with respect to an approximation of the distribution density. A Gaussian Mixture Model can be described as a linear combination of multivariate normal distributions. These may be considered as different classes designated by the index i, which are used to classify the feature vectors. Each normal distribution can be defined by the expectation value $\mu_i$ and the covariance matrix $\Sigma_i$. $\mu_i$ and $\Sigma_i$ can be considered the parameter set of the class i. For obtaining a linear combination of the classes, each class can be weighted with a weight $w_i$, wherein the sum of the weights $w_i$ is normalized to 1. The parameter set of the GMM which comprises the weights $w_i$ and the parameters of the normal distributions is designated as $\theta$. The likelihood for the parameter set $\theta$ can then be obtained to

$$l(x_t|\theta) = \sum_{i=1}^{N} w_i \cdot N_i \left\{ x_t \middle| \mu_i, \sum_i \right\} \qquad (1)$$

The GMM can be trained by using an Expectation Maximization (EM) Algorithm, or by using a K-Means method. As an example, the methods described in "Arthur Dempster, Nan Laird, Donald Rubin: Maximum Likelihood From Incomplete Data via the EM Algortihm, Journal of the Royal Statistical Society, Series B, 39(1): 138, 1977" and in "Frank Dellaert: The Expectation Maximization Algorithm, Tutorial, http://www.cc.gatech.edu/dellaert/em-paper.pdf, 2002" may be used. Starting with an initial model $\theta_0$, the feature vector $x_t$ is assigned to the classes of the models by means of the likelihood. Based on the assignment, the model parameters $\theta$ can be recalculated to obtain a new model set $\theta_1$. These steps can iteratively be repeated, until the likelihood as given in equation 1 has reached a maximum value. Such a method is described in more detail in "Douglas A. Reynolds, Richard C. Rose: Robust Text-Independent Speaker Identification Using Gaussian Mixture Speaker Models, IEEE Transactions on Speech and audio Processing, Vol. 3, No. 1, 1995".

The above described training step is performed only when training or adapting an existing or a newly generated codebook. During speech and speaker recognition the feature vectors are simply classified on the multivariate Gaussian distributions of the codebooks. During the classification, a likelihood score is obtained for each codebook of for each feature vector in step 104. As an example, for the standard codebook, a list of the n-best normal distributions achieving the best likelihood values is determined for a feature vector. Based on the same set of normal distributions, the likelihood of the speaker dependent codebooks can be approximated, and the inverse can be used as a measure for recognizing a change of speaker. Such a method of determining likelihood scores is in detail described in DE 10 209 324 C1, which is incorporated herein by reference in its entirety. As an example, for each feature vector, a probability is determined that the feature vector corresponds to a normal distribution of the codebook under consideration. Probabilities above a certain threshold value may then be used for determining the likelihood for the codebook under consideration.

In step 105, a moving average of likelihood scores calculated over a predetermined number of feature vectors is determined for each codebook. As an example, the likelihood scores of the last 100 feature vectors may be added or averaged. It is also possible to weight likelihood values which were obtained further in the past lower than currently obtained likelihood values.

The classification result of the codebook which achieves the highest average likelihood score is then delivered to a speech recognition step in step 106. In the speech recognition step, a decoder may then perform a speech recognition based on the classification results, e.g. by using an acoustic model implementing Hidden Markov Models (HMMs), a vocabulary and a speech model. The result of the speech recognition step may be the identification of an element from a larger list, or a text output in form of a word or a phrase or the like. If for a first part of an utterance, a first codebook achieves high likelihood scores, and for a second part, another codebook achieves high likelihood scores, the codebook which is used for classifying the feature vectors can be changed quickly as a result of step 106. A fast adaptation of the speech recognition system is thus achieved, resulting in an improvement of the recognition rate.

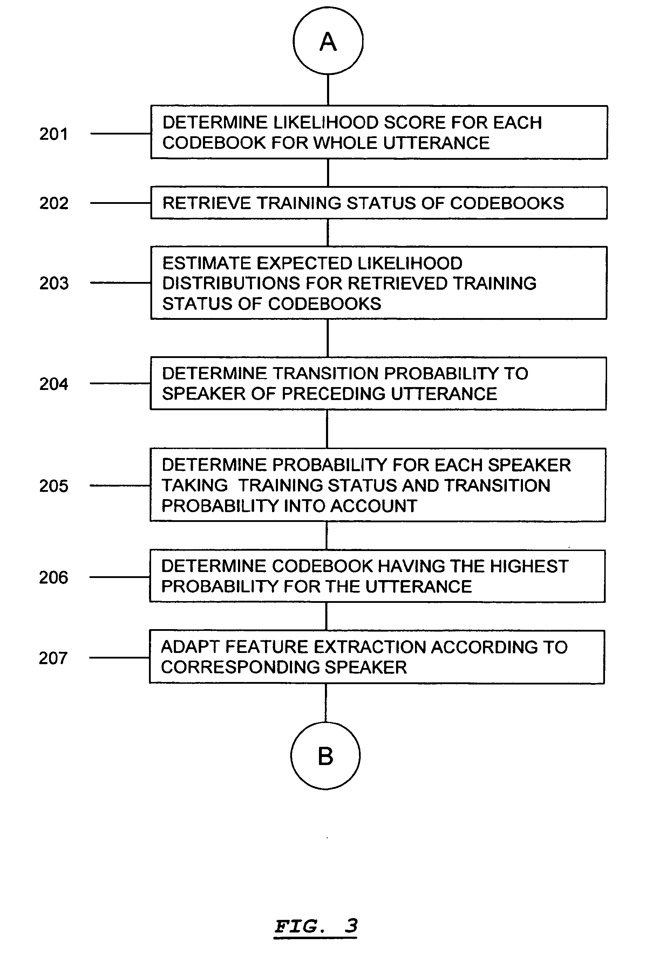

In decision step 107 it is checked whether the end of the utterance has been reached. If the end is not reached, the method continues with step 102 by extracting further feature vectors from the utterance. If the end is reached, the method continues with step 201 of Fig. 3, wherein the whole utterance is considered on a higher time scale.

Fig. 3 illustrates a particular embodiment of step 200 of Fig. 1. For each codebook, a likelihood score for the whole utterance is determined in step 201. As an example, the logarithm of the likelihood values of all feature vectors which were used during decoding is summed for each codebook. Other possibilities include the summation of all likelihood values determined for a particular codebook, or the formation of an average value of all likelihood scores for a codebook. As mentioned above, likelihood values obtained for a codebook depend on the training state of the particular codebook, and are further correlated to the likelihood scores of the other codebooks, due to their derivation from the same standard codebook. To account for the training status, the training status of the codebooks is retrieved in step 202. In the following, the logarithm of a likelihood score of a speaker model of speaker i for an utterance x at a time t is designated as $l_i^s(x_t)$,

wherein s indicates the number of utterances to which the speaker model was adapted, i.e. its training status. Note that $x_t$ designates an utterance in the following, and not a feature vector. The speaker independent standard codebook is generally trained on a large number of utterances, and it is not adapted during the operation of the system, so that its training status is not considered. The likelihood score obtained for an utterance for the standard codebook is designated as $l_o(x_t)$. To reduce correlations between speakers, the likelihood scores are normalized to the likelihood score of the standard codebook wherein the logarithmic likelihood difference

$$l_i^{S_i}(x_t) - l_0(x_t) \qquad (2)$$

is obtained. The correlations are generally due to the statistical dependencies of the speaker models, which are obtained by an adaptation of the standard codebook, and to the dependency on the actual utterance. By performing the normalization, the dependencies on the actual utterance can be compensated, so that mainly the dependencies on the speaker models remain. Correlation between the likelihood values for the different codebooks, i.e. speaker models, can thus be reduced.

To judge the confidence of a likelihood score obtained for a codebook, the likelihood score is compared to expected likelihood score distributions in the present invention. Although in the following description, the likelihood score will be compared to a distribution specific to a particular training state of a speaker model, it may equally well be compared to any other relevant likelihood score distribution, such as a distribution for a particular speaker, or for a gender of speaker, or for a combination thereof. The expected likelihood score distributions are estimated for the retrieved training status of the codebooks in step 203. Such expected likelihood score distributions, or parameters characterizing such distributions can be stored as prior knowledge in the speech recognition system, or they may be generated during operation of the speech recognition system.

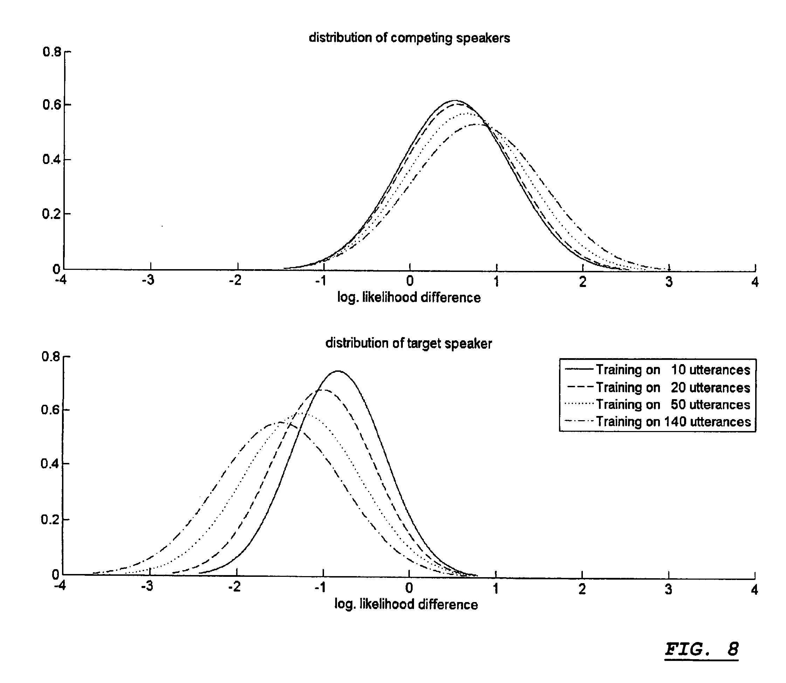

Examples of such expected distributions of likelihood scores are shown in Fig. 8 for different training states of the speaker models (trained with 10, 20, 50 and 140 utterances). The upper part of the figure shows a diagram for the case where the speaker corresponding to the codebook had not originated the utterance (competing speaker). The lower part of Fig. 8 shows a diagram where the speaker had originated the utterance. The upper diagram shows that for the competing speaker, logarithmic likelihood difference values above o are expected, wherein the expectation value of the distribution is shifted towards higher likelihood difference values for higher training states of the codebook. For the lower diagram, i.e. for the actual or target speaker, difference values below o are expected wherein the values are again shifted further away from o with an increasing training status. Note that the curves shown in Fig. 8 are an average over the codebooks of 50 speakers, with 50 utterances being tested for each speaker. In Fig. 8, the y-axis indicates the probability of finding a particular likelihood difference. A likelihood difference determined for an utterance during speech recognition for a particular codebook can then be compared to the distribution of Fig. 8 for the training state of the particular codebook. The probability of finding the determined likelihood difference can then be calculated for the case where the speaker corresponding to the codebook is assumed to be the actual speaker, and for the case where it is assumed not to be the actual speaker.

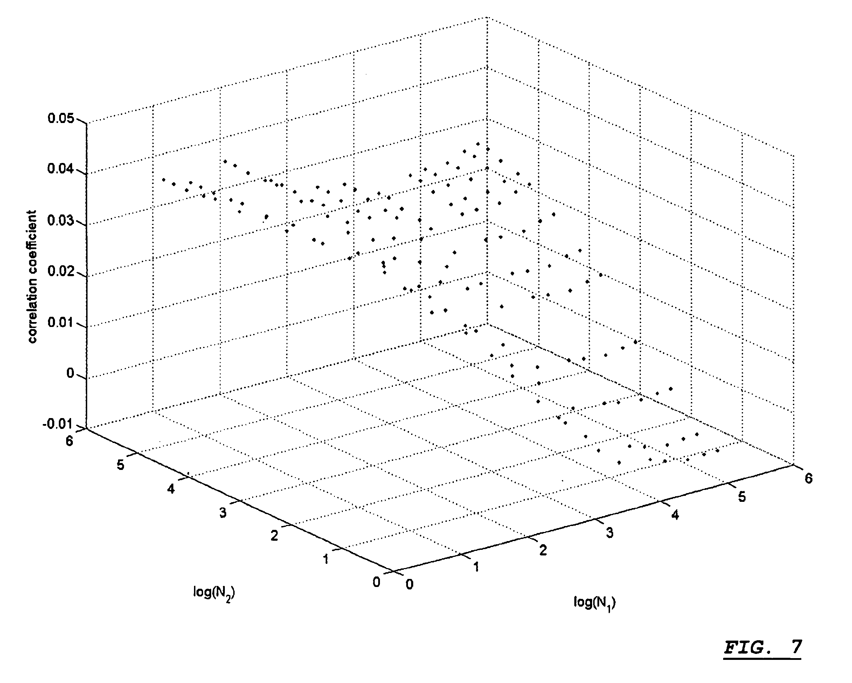

To determine whether the assumed speaker and the non-involved or competing speakers can be modeled by independent statistical models, the statistical dependencies between these were investigated. Fig. 7 shows the correlation between the normalized likelihood scores of the actual speaker and of a competing speaker as a correlation coefficient. $N_1$ designates the training state of the assumed speaker, and $N_2$ designates the training state of the competing speaker. At relatively low training states, there is only a low correlation between the assumed speaker and the competing speaker. For well-trained models, Fig. 7 shows almost no correlation. Accordingly, independent statistical models can be used for the assumed speaker and the competing speaker.

The curves shown in Fig. 8 for the assumed speaker and the competing speaker can thus be described by independent distributions. As an example, for describing the distribution of the logarithmic likelihood differences of the assumed speaker, a one-dimensional normal distribution with a mean value $\mu_1 = f_{\mu 1}(s_1)$ and a standard deviation $\sigma_1 = f_{\sigma 1}(s_1)$ can be used. Correspondingly, multi-variate normal distributions may be used for describing the distributions expected for the competing speakers. These may further consider statistical dependencies of the competing speakers. In the following, the speaker under consideration, i.e. the assumed speaker is designated with the index i, and the speakers corresponding to the N-1 remaining codebooks are designated as the competing speakers (with N codebooks in total). For the competing speakers, the mean value $\mu_2$ and the variants $\Sigma_2$ characterizing the corresponding normal distributions can then be written as vectors:

$$\mu_2 = E\left\{ \begin{pmatrix} l_1^{s_i}(x_i) - l_0(x_i) \\ \vdots \\ l_{i-1}^{s_i}(x_i) - l_0(x_i) \\ l_{i+1}^{s_i}(x_i) - l_0(x_i) \\ \vdots \\ l_N^{s_i}(x_i) - l_0(x_i) \end{pmatrix} \right\} \tag{3}$$

$$\sum_2 = E\left\{ \left[ \begin{pmatrix} l_1^{s_1}(x_i) - l_0(x_i) \\ \vdots \\ l_{i-1}^{s_i}(x_i) - l_0(x_i) \\ l_{i+1}^{s_i}(x_i) - l_0(x_i) \\ \vdots \\ l_N^{s_i}(x_i) - l_0(x_i) \end{pmatrix} - \mu_2 \right] \cdot \left[ \begin{pmatrix} l_1^{s_2} - l_0(x_i) \\ \vdots \\ l_{i-1}^{s_2}(x_i) - l_0(x_i) \\ l_{i+1}^{s_2}(x_i) - l_0(x_i) \\ \vdots \\ l_N^{s_2}(x_i) - l_0(x_i) \end{pmatrix} - \mu_2 \right] \right\} \tag{4}$$

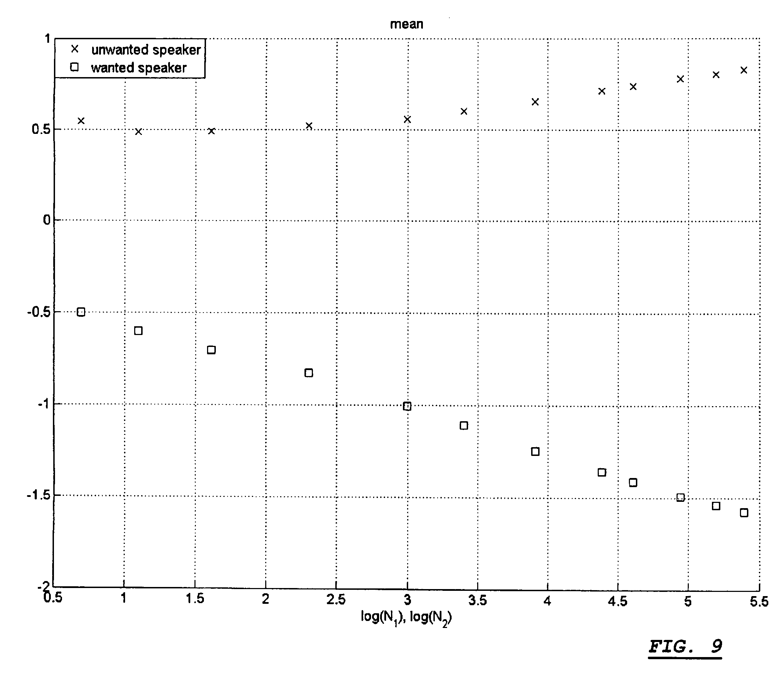

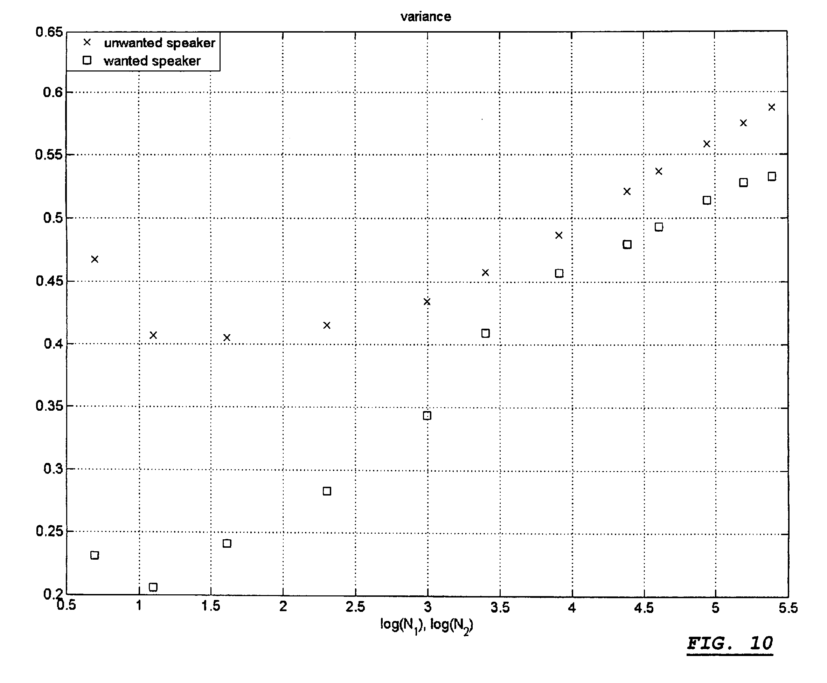

Fig. 9 and Fig. 10 compare the characterizing features $\mu$ and $\Sigma$ of the normal distributions, respectively, for an assumed speaker and a competing speaker. The comparison is made for the case where the models for both speakers have the same training state. As already indicated with respect to Fig. 8, the mean value for the distribution of the assumed speaker decreases with increasing training level, whereas the mean value for the competing speaker increases (Fig. 9). For lower training states, the variances show larger differences for both speakers, whereas for higher training states, the variances run substantially parallel.

The values shown in Fig. 9 and Fig. 10 may be approximated by curves, e.g. by a linear or polynomial fit, and may be provided in the speech recognition system as prior knowledge. Based on this knowledge and the retrieved training status, the corresponding likelihood score distribution can then be reconstructed. As soon as the values for $\mu$ and $\Sigma$ are known, the logarithmic likelihood difference determined for an utterance for a particular codebook can be inserted into the corresponding normal distribution as a function value, and the corresponding probability is obtained.

Another possibility is to train multilayer perceptrons (MLPs) for representing the parameters $\mu$ and $\Sigma$. As an example, two MLPs may be trained which calculate the individual elements of the mean vector $\mu$ and the covariance matrix $\Sigma$ for a given pair $s_1$ and $s_2$ of training states of competing speakers. For an inversion of the covariance matrix, a generalized inverse or pseudo inverse may be used.

Accordingly, the method of the present embodiment provides an efficient method of obtaining an expected likelihood distribution for a codebook. The expected likelihood score distribution may not only be based on training values of codebooks, but also on other parameters, such as the length of the utterance or a signal to noise ratio of the sound signal corresponding to the utterance. Further, different expected distributions can be provided for different individual speakers.

Now turning back to Fig. 3, a transition probability for a transition between a speaker of a preceding utterance and a speaker of the current utterance may be determined in step 204. The transition probability can be determined on the basis of prior knowledge and current or external information. Examples of information considered in the determination of the transition probabilities are given above. Again, the transition probability may be used to fine-tune the frequency with which speaker changes are detected. Step 204 is optional, the transition probabilities do not necessarily need to be considered at the second stage already. They can be considered in the third stage described with respect to Fig. 4, e.g. together with a transition probability to the speaker of a subsequent utterance.

Taking the training status and possibly the transition probability into account, a probability is determined for each speaker, i.e. for each corresponding codebook in step 205. For a particular codebook, i.e. for a particular assumed speaker, the probability may then comprise a probability term for the assumed speaker determined on the basis of the lower diagram of Fig. 8, and a probability term for the competing speakers determined on the basis of the upper diagram shown in Fig. 8. It may further comprise a probability term for the transition probability. In the following, the probability determined for the codebook is considered a posteriori probability.

The determination of the posteriori probability for a codebook for an utterance will be described in detail in the following. For an assumed speaker $i_t$, and with the presence of the competing speakers $i_{t-1}$, the probability that it produced the logarithmic likelihood values $l_0$, $l_1$, ... , $l_N$ for the utterance $x_t$ at time t is to be determined. In the following considerations, the training states $s_1$ and $s_2$ are omitted for reasons of clarity. By using the Bayes-theorem, a posteriori probability can be determined for the speaker to:

$$p(i_t | i_{t-1}, l_0(x_t), l_1(x_t), ..., l_N(x_t)) = \frac{p(l_1(x_t), ..., l_N(x_t) | i_t, i_{t-1}, l_0(x_t))}{p(l_0(x_t), ..., l_N(x_t) | i_{t-1})} \cdot p(i_t, l_0(x_t) | i_{t-1}) \quad (5)$$

As can be seen from the above expression, the speaker $i_{t-1}$ of the preceding utterance is considered. An analogue expression can be found for the "backward decoding" considering the speaker $i_{t+1}$ of a subsequent utterance, as will be mentioned later with respect to the third stage. Assuming that the preceding speaker $i_{t-1}$ does not have an influence on the present likelihood score, equation 5 can be amended to

$$p(i_t | i_{t-1}, l_0(x_t), l_1(x_t), ..., l_N(x_t)) = \frac{p(l_1(x_t), ..., l_N(x_t) | i_t, l_1(x_t))}{p(l_1(x_t), ..., l_N(x_t))} \cdot p(l_0(x_t) | i_t) \cdot p(i_t | i_{t-1})$$

$$(6)$$

The term $p(l_0(x_t) | i_t)$ can be considered prior knowledge about the absolute likelihood score of the standard codebook and can be considered statistically independent from the speaker under consideration. Accordingly, the term does not comprise information on the current speaker, it can simply be used as a normalizing factor. Thus, the following equation is obtained:

$$p(i_t|i_{t-1},l_0(x_t),l_1(x_t),...,l_N(x_t)) = \frac{p(l_1(x_t),...,l_N(x_t)|i_t,l_0(x_t))}{const.} p(i_t|i_{t-1}) \qquad (7)$$

The normalizing constant can be obtained by a normalization of the posteriori probability p to a value of 1. In the following expression, the abbreviations

$$l_i(x_t) = (l_1(x_t),...,l_{i-1}(x_t),l_{i+1}(x_t),...,l_N(x_t)) \qquad (8)$$

$$l(x_t) = (l_1(x_t),...,l_N(x_t)) \qquad (9)$$

will be used. Due to the observations made with respect to Fig. 7, it can be assumed that the likelihood scores of the assumed speaker are statistically independent of the likelihood scores of the competing speakers. Accordingly, the following expression can be obtained for the posteriori probability:

$$p(i_t|i_{t-1},l_0(x_t),l(x_t)) = p(i_t|i_{t-1}) \cdot p(l_{i_t}(x_t)|i_t,l_0(x_t)) \cdot \frac{p(l_{i_t}(x_t)|i_t,l_0(x_t))}{const.} \qquad (10)$$

As mentioned above, this equation comprises a first probability term for transition probabilities, a second probability term for the probability of finding the likelihood value obtained for the assumed speaker, and a third probability term for finding the likelihood values if the remaining speakers are assumed to be competing speakers. Accordingly, $p(l_{i_t}(x_t)|i_t,l_0(x_t))$ corresponds to the one-dimensional normal distribution with the parameters $\mu 1$, and $\Sigma 1$ for the assumed speaker, whereas $p(1_{i_t}(x_t)|i_t,l_0(x_t))$ corresponds to the multivariate normal distribution with the parameters $\mu 2$, $\Sigma 2$ of the competing speakers. These probability terms can thus be expressed as

$$p(l_{i_t}(x_t)|i_t,l_0(x_t)) = N(l_{i_t}(x_t) - l_0(x_t)|\mu_1,\sigma_1) \qquad (11)$$

$$p(l_{i_t}(x_t)|i_t,l_0(x_t)) = N(l_{i_t}(x_t) - l_0(x_t) \cdot \underline{1}|\mu_2,\Sigma_2) \qquad (12)$$

wherein $\underline{1}$ is a vector of the dimension N-1, with all elements equal to 1.

The remaining factor $p(i_t|i_{t-1})$ is a transition probability which can be determined on the basis of external information about a speaker change. The consideration of this factor provides a simple means for integrating external knowledge in form of a probability, without the need to change the modeling of the normal distributions. This is a great advantage due to its flexibility.

It should be clear that the above described determination of the posteriori probability does not need to be performed at the second state, i.e. as indicated in Fig. 3, but may be performed at the third stage, after several utterances were recorded, i.e. in step 300. Further, as mentioned above, a posteriori probability may also be determined in step 205 which does not take the transition probability into account.

In the next step 206, the codebook having the highest probability for the utterance is determined. As the training states of the codebooks were considered, a meaningful comparison between the probabilities for the different codebooks becomes possible. Accordingly, the determination of the speaker of the utterance based on the probabilities is generally more reliable than the determination on the basis of the absolute likelihood values. As the speaker of the utterance can be determined with a relatively high confidence, an adaptation of the feature vector extraction can be performed in accordance with the determined speaker in step 207. The adaptation may comprise the adjustment of speaker dependent parameters of the feature vector extraction. It should be noted that although such an adaptation of the feature vector extraction can improve the speech recognition performance, an incorrect adaptation is not critical, as it may be changed again for a subsequent utterance. Basing the adaptation of the feature extraction on the probabilities determined for the codebooks is particularly useful in cases, where the characteristics of the recorded sound signal experience a considerable change, e.g. when the recording of an utterance is changed from a built-in microphone to a headset or the like. As the likelihood scores can be compared to expected likelihood score distributions for individual speakers, said distributions each being determined by a characteristic and $\Sigma$, it is still possible to determine a meaningful probability for each codebook, whereas the comparison of absolute likelihood values would not allow the system to draw a conclusion regarding speaker identity. An improvement in robustness and accuracy of a speaker determination can thus be achieved.

In other embodiments, the adaptation of the feature vector extraction may simply be performed based on the absolute likelihood values for the individual codebooks.

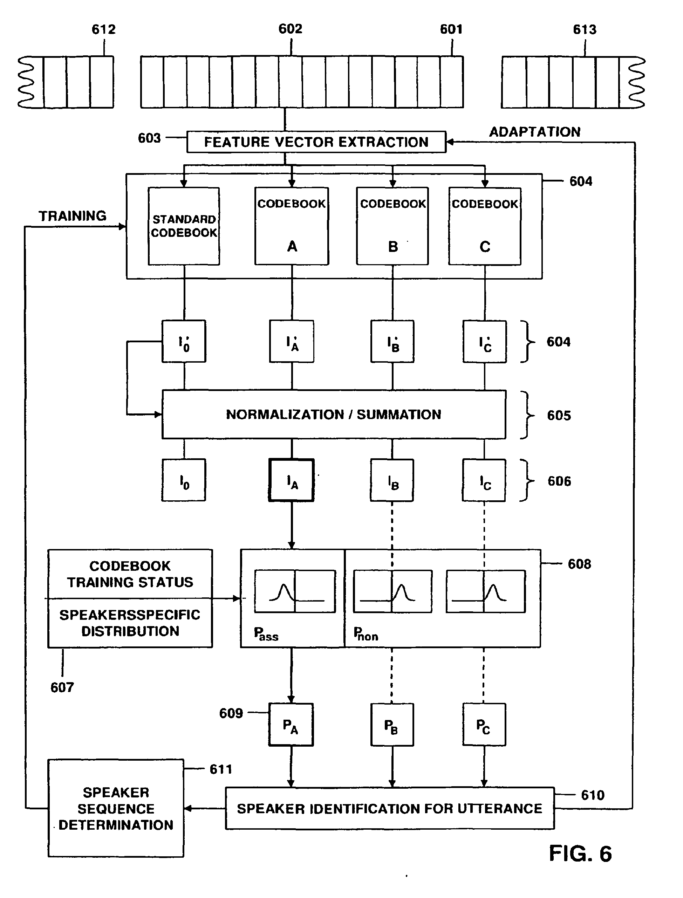

A schematic overview of the method of the present embodiment is given in Fig. 6. The utterance 601 is divided into a number of frames 602. Note that the frames may overlap. A feature vector extraction 603 is performed on the frame 602, and the feature vectors obtained after the extraction are classified on the codebooks 604. Codebooks 604 comprise a standard codebook, as well as speaker adapted codebooks A, B and C. Likelihood scores are calculated for each features vector for each codebook. A summation and normalization 605 of the likelihood scores 604 for the utterance 601 can be performed, e.g. by summing the logarithmic likelihood scores for each codebook and normalizing them with the logarithmic likelihood score for the standard codebook. The logarithmic likelihood differences 1 606 are thus obtained. By using the prior knowledge 607, which may comprise the codebook training status or speaker specific likelihood score distributions, a probability can be determined for each codebook. In the example of Fig. 6, the probability for codebook A is determined, i.e. A is the assumed speaker and B and C are the competing speakers. Accordingly, the likelihood difference $l_A$ is compared to the distribution for the assumed speaker, whereas $l_B$ and lc are compared to the likelihood score distributions for the competing speakers. As a result, the probability $p_A$ 609 is obtained. For determining the probabilities $p_B$ and pc, the speakers B and C are taken as the assumed speaker, respectively. The sum of the resulting probabilities may then be normalized to 1. Whereas based on the likelihood scores 604, a speaker can be identified for a section of utterance 601, the probabilities 609 can be used to identify the speaker for the whole utterance 601. As indicated in the Figure, the result of the speaker identification can then be used to adapt the feature vector extraction 603. Further, the probabilities obtained are used for determining a sequence of speakers corresponding to the sequence of utterances 612, 601 and 613. It should be clear that such a sequence of utterances may comprise more than just three utterances. Based on the result of the speaker sequence determination 611, a training of the codebooks 604 can be performed, or new codebooks can be generated.

The identification of the sequence of speakers is described in more detail with respect to Fig. 4. Further utterances are recorded in step 301 and processed correspondingly, i.e. as described with respect to Figs. 2 and 3, in step 302. In particular, posteriori probabilities are determined for each speaker model for the recorded utterances. To improve the recognition of the sequence of speakers, the processing is delayed for a predetermined number of utterances. If the predetermined number of utterances is reached in step 303, a search algorithm is used in step 304 to determine the best matching sequence of speakers based on the probabilities determined for the codebooks for the sequence of utterances. In the example of Fig. 4, a forward-backward decoding is performed for finding the most probable sequence of speakers. It should be clear that other search algorithms may also be used, such as a Viterbi search algorithm, or a simple forward or backward decoding.

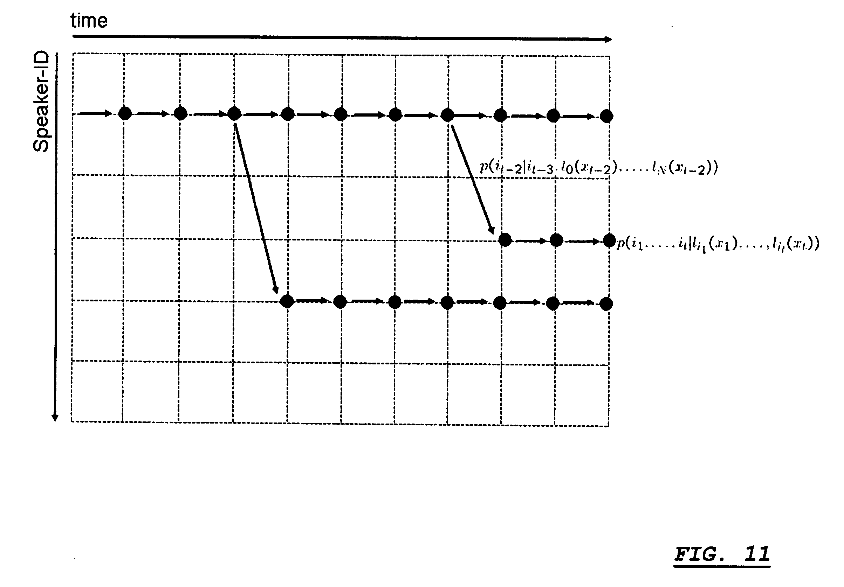

In the following, a detailed example will be given on how such a decoding can be performed. As mentioned above, a probability that the utterance corresponds to a particular speaker or codebook was determined for each utterance, which is similar to an HMM model wherein the speaker is the hidden state, and the observed likelihood scores are produced with a certain probability by each speaker ("emission probability"). Further, a transition probability to a preceding and a subsequent speaker can be determined, as shown with respect to equation 10, which shows the case for a transition to a preceding speaker and can similarly be adapted for a subsequent speaker. The path through the different states having the highest probability is to be found. This is schematically illustrated in Fig. 11, which indicates a transition probability for a forward transition from one speaker ID to another, as well as a posteriori probability for a particular speaker ID. Note that Fig. 11 is an example of a forward decoding corresponding to a Viterbi algorithm.

As an example, three speakers $i_{1,2,3}$ and a sequence of three utterances $x_{1,2,3}$ are assumed. The probability $p(i_3,i_2,i_1|x_1,x_2,x_3)$ that the sequence of utterances was produced by a certain sequence of speakers has to be found.

By using a forward decoding algorithm, this probability is determined on the basis of knowledge about the current utterance and the preceding utterance. This can be performed incrementally. By applying the Bayes-theorem, the probability can be written as:

$$p_v(i_3,i_2,i_1|x_1,x_2,x_3)=p(i_3|i_2,i_1,x_1,x_2,x_3)\cdot p(i_2,i_1|x_1,x_2,x_3) \qquad (13)$$

$$=p(i_3|i_2,i_1,x_1,x_2,x_3)\cdot p(i_2|i_1,x_1,x_2,x_3)\cdot p(i_1|x_1,x_2,x_3) \qquad (14)$$

As only a transition between neighboring points in time is considered, i.e. between neighboring utterances, which corresponds to a first order Markov chain, the expression can be simplified to

$$p_v(i_3,i_2,i_1|x_1,x_2,x_3)=p(i_3|i_2,x_2,x_3)\cdot p(i_2|i_1,x_1,x_2)\cdot p(i_1|x_1) \qquad (15)$$

Application of the Bayes-theorem to the last factor gives

$$p(i_1|x_1)=p(x_1|i_1)\cdot\frac{p(i_1)}{p(x_1)}=p(x_1|i_1)\cdot\frac{p(i_1)}{\sum_{i_1}p(x_1|i_1)\cdot p(i_1)}\ . \qquad (16)$$

In its most general form, the forward decoding represents the probability $p(i_{1:t}\,|\,x_{1:t})$ wherein $i_{t1}$ is the probability for the speaker i at time t. The expression $i_{1:t-1}$ and $x_{1:t}$ are abbreviations for $i_1$, ..., $i_{t-1}$ and $x_1$, ..., $x_t$. The probability can thus be determined to

$$p(i_t|i_{1:t-1},x_{1:t})=\frac{p(i_{1:t}|x_{1:t})}{p(i_{1:t-1})} \qquad (17)$$

which is only dependent on knowledge about the current and past utterances. In particular for the first utterances of a sequence, the probability can thus not be determined with a high confidence.

A backward decoding, which may also be applied, uses a reverse processing, which starts with the last utterance. Only knowledge about the subsequent utterances with respect to the utterance under consideration it taken into account. This implies that the scores and the data required for speaker adaptation using these utterances has to be stored in a buffer, before the sequence of utterances is decoded. Similar to the above example, the following expression can be obtained for three utterances:

$$p_r(i_3,i_2,i_1|x_1,x_2,x_3)=p(i_1|i_2,x_1,x_2)\cdot p(i_2|i_3,x_2,x_3)\cdot p(i_3|x_3) \qquad (18)$$

Again applying the Bayes-theorem the last factor of the above equation can be determined to

$$p(i_3|x_3)=p(x_3|i_3)\cdot\frac{p(i_3)}{p(x_3)}=p(x_3|i_3)\cdot\frac{p(i_3)}{\sum_{i_3}p(x_3|i_3)\cdot p(i_3)} \qquad (19)$$

With T indicating the point of time of the last utterance, the probability can be written in the most general form as

$$p\left(i_{t}\middle|i_{t+1:T}, x_{t:T}\right) = \frac{p\left(i_{t:T}\middle|x_{t:T}\right)}{p\left(i_{t+1:T}\right)} \qquad (20)$$

Backward decoding thus only considers information about future utterances. For ensuring a reliable determination of the sequence of speakers, it is beneficial to use a forward-backward decoding method. In case of a first order Markov chain, this can be achieved by a simple multiplication and a new scaling of the probabilities. For a certain time $t_1$, this can be expressed as follows:

$$p\left(i_{t_1}\middle|i_{1:t:T, t\neq t_1}, x_{1:t:T}\right) = \frac{p\left(i_{t_1}\middle|i_{1:t_1-1}, x_{1:t_1}\right) \cdot p\left(i_{t_1}\middle|i_{t_1+1:T}, x_{t_1:T}\right)}{p\left(x_{t_1}\middle|i_{t_1}\right) \cdot p\left(i_{t_1}\right)} \cdot p\left(x_{t_1}\right) \qquad (21)$$

By using the above expression, the probability that a speaker originated the utterance at time $t_1$ can be determined by using the knowledge about the past and the future utterances. Yet, it should be noted that the identity of the speakers of the preceding and subsequent utterances is not known or is at least uncertain. Accordingly, all paths have to be considered which assume the speaker $i_{t_1}$ at time $t_1$. Summation over all paths leads to the expression

$$p\left(i_{t_1}\middle|x_{1:t:T}\right) = \sum_{allpaths} \frac{p\left(i_{t_1}, i_{1:t_1-1}\middle|x_{1:t_1}\right) \cdot p\left(i_{t_1}, i_{t_1+1:T}\middle|x_{t_1:T}\right)}{p\left(x_{t_1}\middle|i_{t_1}\right) \cdot p\left(i_{t_1}\right)} \cdot p\left(x_{t_1}\right) \qquad (22)$$

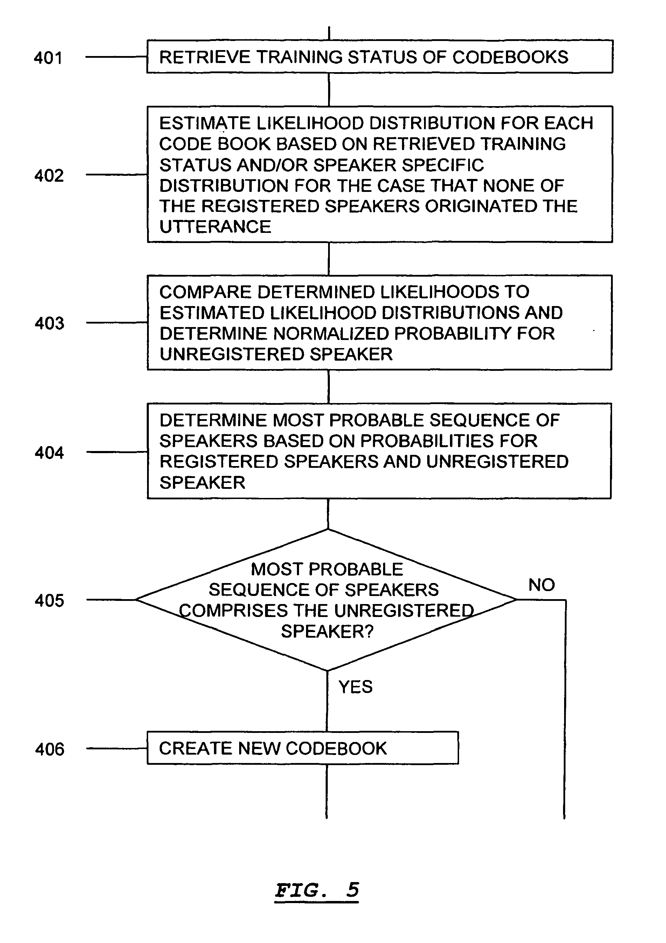

One advantage of this forward-backward decoding as used in the present embodiment is that for each point in time, a discrete posteriori probability is used for the speaker both in the forward as well as in the backward branch. There discrete probabilities are easier to interpret than the likelihoods in a conventional decoding method, and a memory overflow can be prevented. Further, the whole history can implicitly be considered in the forward path.
By using the expressions of equation 10, and a corresponding expression for a backward path implementing a transition probability for a subsequent speaker, a Viterbi decoding analogue to equations 15 and 18 may also be performed for finding the sequence of speakers corresponding to the sequence of utterances. As the approach of the present embodiment considers the transition probability to the preceding and the subsequent speaker, which may be determined in accordance with external information, a great flexibility of the decoding procedure can be achieved. This is an advantage over prior approaches, which used a Viterbi search based on likelihood scores for utterances. By using posteriori probabilities as given in equation 10, the comparison of a speaker under consideration with the remaining speakers can be based on a product of a model for the assumed speaker and of a model for the respective competing speaker. This approach is independent on the number of speakers, as an additional speaker only results in an increase of the dimension of the multivariate normal distribution of the competing speakers. The addition of a new speaker will be described in more detail with respect to Fig. 5 further below.
By using the posteriori probabilities of equation 10 and a corresponding probability considering a subsequent speaker, a posteriori probability for a whole sequence of utterances can be found based on equation 21. Using a forward-backward decoding based on equation 21 generally achieves better results than using a Viterbi Algorithm based on the same equation. The decoding can be performed along the lines of the Baum-Welsh-Algorithm. As the Baum-Welsh-Algorithm is well known to a person skilled in the art, it will not be described in detail here. Based on equation 22, the following iterations are obtained:

$$p\left(i_{t}\middle|l(x_{0}),...,l(x_{T})\right) = f_{t}\left(i_{t}, l(x_{t})\right) \cdot b_{t}\left(i_{t}, l(x_{t})\right) \cdot \frac{p(x_{t})}{p\left(x_{t}\middle|i_{t}\right) \cdot p(i_{t})} \qquad (23)$$

$$f_i\big(i_i,l(x_i)\big)=\sum_{i_{i-1}}f_{i-1}\big(i_{i-1},l(x_{i-1})\big)\cdot p\big(i_i|i_{i-1},l(x_i)\big) \qquad (24)$$

$$b_i\big(i_i,l(x_i)\big)=\sum_{i_{i+1}}b_{i+1}\big(i_{i+1},l(x_{i+1})\big)\cdot p\big(i_i|i_{i+1},l(x_i)\big) \qquad (25)$$

$$f_{-1}\big(i_{-1},l(x_{-1})\big)=1 \qquad (26)$$

$$b_{T+1}\big(i_{T+1},l(x_{T+1})\big)=1 \qquad (27)$$

By using not only the preceding utterance, but also subsequent utterances, the confidence of the decision can be increased. To achieve this increase in confidence, the final determination of the sequence of speakers has to be delayed. As an example, the final determination of the speaker of an utterance based on a sequence of utterances may be delayed for a fixed predetermined number of utterances. Turning back to Fig. 4, the sequence of speakers having the highest probability of corresponding to the sequence of utterances is determined in step 305. As the speaker can be determined with a high confidence, a training of the corresponding codebook can be performed with the utterance in step 306. As mentioned above, the training may be performed by adapting the multivariate normal distributions of the codebook to the utterance. If for particular utterances, a high posteriori probability is already determined, e.g. above a certain threshold value indicating a high confidence of speaker determination, the training may already be performed prior to determining said sequence of speakers, i.e. without delay. If a particularly low posteriori probability is found for a particular utterance, i.e. below a threshold value, the utterance may be rejected and not used for training, or a whole sequence of utterances may be rejected if the probability for the whole sequence is below a threshold value. A training of the codebooks with an incorrect utterance can thus be prevented.

It should be clear that there are a large number of modifications which may be made to the method without leaving the scope of the invention. As an example, forward decoding may be performed based on equation 10, with the feature vector extraction being adapted in accordance with the result of the forward decoding.

Turning now to Fig. 5, the creation of a new codebook is illustrated. After retrieving the training status of the codebooks in step 401, all codebooks are considered as competing speakers, and accordingly, an expected likelihood distribution for each codebook for the case of a competing speaker is retrieved in step 402. The distributions may again be based on the training status and/or on speaker specific distributions of likelihood scores. The likelihood scores determined for the codebooks are compared to the retrieved likelihood score distributions in step 403, wherein a normalized probability is determined based on the comparison. As all speakers are considered as competing speakers, this corresponds to the determination of a probability for an unregistered speaker. It can thus be based on equation 12. To avoid the creation of multiple new codebooks for the same new speaker, the present embodiment considers a sequence of utterances for detecting a new speaker. As described with respect to Fig. 4, the sequence of speakers having the highest probability of corresponding to the sequence of utterances is determined in step 404. The forward-backward search now considers N+1 speakers or states (for N codebooks and one unregistered speaker). The path through the possible states can thus comprise a transition to the unregistered speaker (also termed "Out-of set speaker"). The search is again based on the probabilities for the registered and said unregistered speaker.

If it is found in decision step 405 that the most probable sequence of speakers comprises the unregistered speaker, a new codebook is created for the unregistered speaker in step 406. For avoiding the creation of excess codebooks, further restrictions may be applied. This may comprise the detection of a predetermined number of utterances for the unregistered speaker, before the new codebook is created. Other possibilities include that the probability for the unregistered speaker has to be above a certain threshold value, or has to be above the probabilities for all other registered speakers. Yet this is optional.

This new codebook may be trained by the utterance or utterances for which the unregistered speaker was detected. If the unregistered speaker is not comprised in the most probable sequence of speakers in step 406, no new codebook is created, and the method continues, e.g. with the training of the codebooks present in the system as described with respect to Fig. 4.

In other embodiments, the creation of a new codebook may be based on absolute likelihood values for the registered codebooks, e.g. if these are below a given threshold value.

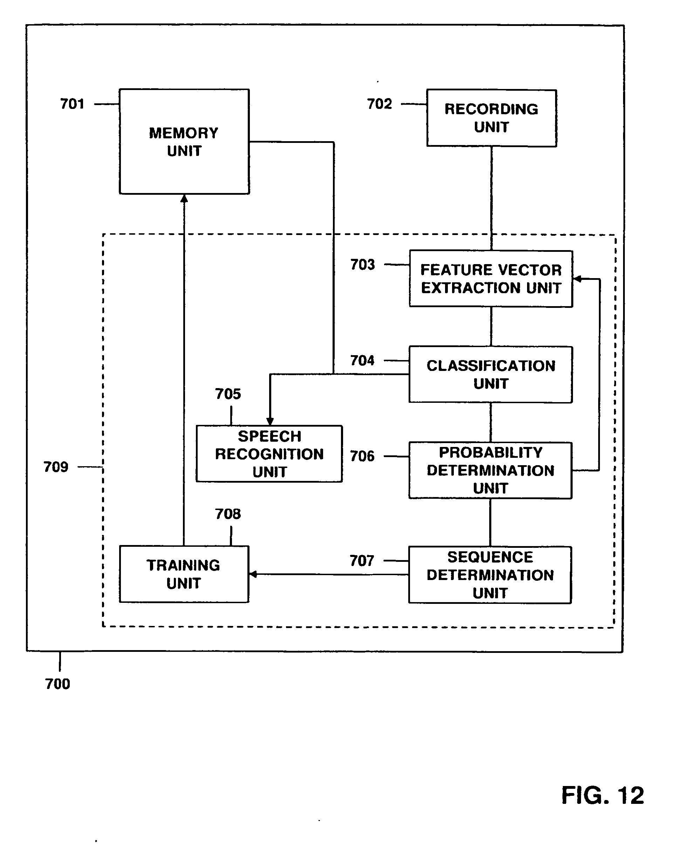

Fig. 12 schematically shows an electronic device 700 comprising a speech recognition system with automatic speaker detection and speaker model training. Device 700 may for example be implemented as a portable navigation device, a dashboard mounted navigation device or entertainment system for a vehicle, a person digital assistant, a mobile telephone, a portable computer and the like. Device 700 comprises a memory unit 701 which stores a plurality of speaker models in form of a standard codebook and plural user adapted codebooks. Unit 701 may comprise any type of memory, such as random access memory, flash memory, a hard drive and the like. Recording unit 702 is adapted to record an utterance, and may thus comprise a microphone and an analogue to digital converter. Feature vector extraction unit 703 determines feature vectors for time frames of a recorded utterance, as described above. Unit 703 interfaces classification unit 704, which classifies the feature vectors according to the codebooks stored in memory unit 701. Results of the classification are supplied to speech recognition unit 705, which performs a speech recognition using e.g. acoustic models, such as HMMs, a recognition vocabulary and a language model. Likelihood scores obtained in classification unit 704 are then supplied to probability determination unit 706, which determines a posteriori probability for the utterance as described above. In accordance with the speaker determined based on the posteriori probability, the feature vector extraction unit 703 may be adapted to the particular speaker. After a predetermined number of utterances recorded and buffered, e.g. in memory unit 701, the sequence determination unit 707 determines the most probable sequence of speakers for the buffered sequence of utterances, based on the posteriori probabilities determined for the utterances. If sequence determination unit 707 determines the sequence of speakers with a high enough confidence, the results are supplied to training unit 708, which trains the codebooks stored in memory unit 701 with the corresponding utterances. As such, the functional units of device 700 may implement any of the above described methods. The functional units 703 to 708 may be implemented as software code portions running on a processing unit 709 of device 700. With respect to speaker recognition, device 700 can thus achieve the advantages as outlined above.

While specific embodiments of the invention are disclosed herein, various changes and modifications can be made without departing from the scope of the invention. As an example, normal distributions are used in the above description, yet it is also possible to use other statistical models for modelling the likelihood score distributions as well as the codebooks. The present invention enables a comparison of codebooks of different training levels. Further, new speakers can be added to the system without adapting the speaker recognition method. The above method further allows the use of transition probabilities for speaker transitions, wherein external information, such as from a beamformer or from a restart of the system can be considered, without having to adapt the speaker recognition method. Further, as the number of the speakers (or states) of the system does not need to be known prior to operation, it is more flexible than a modelling of the speakers with Hidden Markov Models and a Viterbi decoding. New speakers can thus be implemented into the system without the need to retrain the whole system. Also, the system is more flexible than neural network approaches, which are generally based on a fixed number of input parameters. The delayed determination of the sequence of speakers enables the determination of a speaker with a high confidence, which enables an automatic training of the codebooks with a reduced risk of codebook deterioration. This is particularly the case when an utterance or a sequence of utterances is rejected for training based on a low posteriori probability determined for the utterance or for the sequence of utterances. By improving the speaker recognition and by providing an automated training of the codebooks, feature vector extraction and classification can be improved, resulting in a better speech recognition performance.

The embodiments described above are to be considered in all respect as illustrative and non-restrictive, and all changes coming within the meaning and equivalency range of the appended claims are intended to be embraced therein.

**Claims**

**1.** A method of recognizing a speaker of an utterance (602) in a speech recognition system, comprising

- comparing the utterance (602) to a plurality of speaker models (604) for different speakers;
- determining a likelihood score (606) for each speaker model, the likelihood score (606) indicating how well the speaker model corresponds to the utterance; and
- for each speaker model (604), determining a probability (609) that the utterance (602) originates from the speaker corresponding to the speaker model (604),

wherein the determination of the probability (609) for a speaker model (604) is based on the likelihood scores (606) for the speaker models and takes a prior knowledge (607) about the speaker model into account,

**characterized in that**

the prior knowledge (607) for each speaker model (604) comprises an expected distribution of likelihood scores for a training state of the speaker model (604), wherein the training state indicates the number of utterances to which the speaker model was adapted; and

taking the prior knowledge (607) into account comprises retrieving the distribution of likelihood scores expected for the training state of the speaker model (604) and comparing the determined likelihood score to the retrieved distribution of likelihood scores expected for the training state of the speaker model (604).

2. The method according to claim 1, wherein the distribution of likelihood scores expected for the training state is estimated by a multilayer perceptron trained on likelihood score distributions obtained for different training states of speaker models, wherein the multilayer perceptron returns parameters of the distribution of likelihood scores for the given particular training state.

3. The method according to any the preceding claims, wherein taking the prior knowledge into account comprises estimating a distribution of likelihood scores expected for the particular speaker model or for the gender of the speaker corresponding to the speaker model and comparing the likelihood score determined for the speaker model to the likelihood score distribution expected for said speaker model.

4. The method according to any of the claims 2 or 3, wherein the estimation of the distribution of likelihood scores further considers at least one of a length of the utterance and a signal to noise ratio of the utterance.

5. The method according to any of the preceding claims, wherein the determining of the probability for a particular speaker model comprises:

  - comparing the likelihood score for the speaker model under consideration to a distribution of likelihood scores for the particular speaker model expected in case that the speaker under consideration is the originator of the utterance, the distribution of likelihood scores being determined based on the prior knowledge;
  - comparing the likelihood scores for the remaining speaker model each to a distribution of likelihood scores expected in case that the remaining speaker is not the originator of the utterance, the distribution of likelihood scores for the remaining speakers being based on the prior knowledge, and
  - determining the probability for the particular speaker model based on the comparisons.

6. The method according to any of the preceding claims, wherein the determination of the probability for a speaker model further considers a transition probability for a transition between the corresponding speaker to a speaker of a preceding and/or subsequent utterance.

7. The method according to claim 6, wherein the transition probability considers at least one of a change of a direction from which successive utterances originate, a shutdown or restart of the speech recognition system between successive utterances, a time lag of adjacent utterances, and a detection of a change of a user of the speech recognition system.

8. The method according to any of the preceding claims, wherein the determination of the likelihood score for a speaker model for the utterance is based on likelihood scores of a classification of feature vectors extracted from the utterance on the speaker model, the classification result for at least one speaker model being used in a subsequent speech recognition step.

9. The method according to claim 8, wherein the utterance is continuously being processed, with the classification result of the speaker model yielding the highest average likelihood score for a predetermined number of feature vectors being supplied to the speech recognition step.

10. The method according to any of the preceding claims, wherein the utterance is part of a sequence of utterances, and wherein said probability is determined for each utterance in said sequence, the method further comprising the step of:

  - determining a sequence of speakers having the highest probability of corresponding to the sequence of utterances, the determination being based on the probabilities determined for the speaker models for the utterances,

wherein each probability for a speaker model for an utterance considers a transition probability for a transition to a speaker of a preceding utterance and/or a speaker of a subsequent utterance.

11. The method according to claim 10, wherein the most probable sequence of speakers corresponding to the sequence of utterances is determined by using a Viterbi search algorithm based on the probabilities determined for the speaker models for the utterances.

12. The method according to claim 10, wherein the most probable sequence of speakers corresponding to the sequence of utterances is determined by using a forward-backward decoding algorithm.

13. The method according to any of claims 10-12, further comprising the step of using an utterance of the sequence of utterances to train the speaker model of the speaker in the sequence of speakers corresponding to the respective utterance.

14. The method of claim 13, wherein the training is performed after said sequence of speakers is determined for a predetermined number of successive utterances or if the probability for a speaker model for an utterance exceeds a predetermined threshold value.

15. The method according to any of the preceding claims, wherein the comparing of the utterance to a plurality of speaker models comprises an extraction of feature vectors from the utterance, the method further comprising the step of adapting the feature vector extraction in accordance with the speaker model for which the highest probability is determined.

16. The method according to any of the preceding claims, wherein the plurality of speaker models comprises a standard speaker model, the determination of the speaker model probabilities for the utterance being based on likelihood scores for the speaker models normalized by a likelihood score for the standard speaker model.

17. The method according to any of the preceding claims, wherein the utterance is part of a sequence of utterances, and wherein said probability is determined for each utterance in said sequence, the method further comprising the steps of

- determining a probability for an unregistered speaker, for which no speaker model exists, for each utterance, the probability being calculated by assuming that none of the speakers of the speaker models originated the utterance;
- determining a sequence of speakers having the highest probability of corresponding to the sequence of utterances, the determination being based on the probabilities determined for the utterances for the speaker models and for the unregistered speaker,
- generating a new speaker model for the unregistered speaker if the unregistered speaker is comprised in the sequence of speakers.

18. The method according to any of the preceding claims, further comprising the step of generating a new speaker model if the likelihood scores for said speaker models are below a predetermined threshold value.

19. The method according to any of the preceding claims, wherein the plurality of speaker models comprises for at least one speaker different models for different environmental conditions.

20. Speech recognition system adapted to recognizing a speaker of an utterance, the speech recognition system comprising:

- a recording unit (702) adapted to record an utterance;
- a memory unit (701) adapted to store a plurality of speaker models for different speakers; and
- a processing unit (709) adapted to perform the following steps:

■ comparing the utterance to the plurality of speaker models;
■ determining a likelihood score for each speaker model, the likelihood score indicating how well the speaker model corresponds to the utterance;
■ for each speaker model, determining a probability that the utterance originates from the speaker corresponding to the speaker model, wherein the determination of the probability for a speaker model is based on the likelihood scores for the speaker models and takes an prior knowledge about the speaker model into account,

**characterized in that**

the prior knowledge for each speaker model comprises an expected distribution of likelihood scores for a particular training state of the speaker model, wherein the training state indicates the number of utterances to which the speaker model was adapted; and
taking the prior knowledge into account comprises retrieving the distribution of likelihood scores expected for the training state of the speaker model and comparing the determined likelihood score to the retrieved distribution of likelihood scores expected for the training state of the speaker model.

21. Speech recognition system according to claim 20, wherein the speech recognition system is adapted to perform the method of one of claims 1-19.

22. A computer program product that can be loaded into the internal memory of a computing device, said product comprising software code portions for performing the method of one of claims 1-19 when the product is executed.

23. An electronically readable data carrier with stored electronically readable control information configured such that when using the data carrier in a computing device, the control information performs the method of one of claims 1-19.

**Patentansprüche**

1. Verfahren zum Erkennen eines Sprechers einer Redeäußerung (602) in einem Spracherkennungssystem, umfassend

- Vergleichen der Redeäußerung (602) mit einer Vielzahl von Sprechermodellen (604) für unterschiedliche Sprecher;
- Bestimmen einer Trefferwahrscheinlichkeit (606) für jedes Sprechermodell, wobei die Trefferwahrscheinlichkeit (606) indiziert, wie gut das Sprechermodell mit der Redeäußerung zusammengehört; und
- für jedes Sprechermodell, Bestimmen einer Wahrscheinlichkeit (609), dass die Redeäußerung (602) von dem Sprecher, der zu dem Sprechermodell (604) gehört, stammt,

wobei die Bestimmung der Wahrscheinlichkeit (609) für ein Sprechermodell (604) auf den Trefferwahrscheinlichkeiten (606) für die Sprechermodelle basiert und eine Vorkenntnis (607) über das Sprechermodell berücksichtigt, **dadurch gekennzeichnet, dass**
die Vorkenntnis (607) für jedes Sprechermodell (604) eine erwartete Verteilung von Trefferwahrscheinlichkeiten für einen Trainingszustand des Sprechermodells (604) umfasst, wobei der Trainingszustand die Anzahl von Redeäußerungen, gemäß denen das Sprechermodell angepasst wurde, indiziert; und
Berücksichtigen der Vorkenntnis (607) Erhalten der Verteilung von Trefferwahrscheinlichkeiten, die für den Trainingszustand des Sprechermodells (604) erwartet wird, und Vergleichen der bestimmten Trefferwahrscheinlichkeit mit der erhaltenen Verteilung von Trefferwahrscheinlichkeit, die für den Trainingszustand des Sprechermodells (604) erwartet wird, umfasst.

2. Verfahren nach Anspruch 1, wobei die Verteilung von Trefferwahrscheinlichkeiten, die für den Trainingszustand erwartet wird, durch ein Mehrschicht-Perzeptron abgeschätzt wird, das an den Trefferwahrscheinlichkeits-Verteilungen, die für verschiedene Trainingszustände des Sprechermodells erhalten werden, trainiert ist, wobei das Mehrschicht-Perzeptron Parameter der Verteilung der Trefferwahrscheinlichkeiten für den gegebenen bestimmten Trainingszustand zurückgibt.

3. Verfahren nach einem der voranstehenden Ansprüche, wobei Berücksichtigen der Vorkenntnis Abschätzen einer Verteilung von Trefferwahrscheinlichkeiten, die für das bestimmte Sprechermodell oder für das Geschlecht des Sprechers, der zu dem Sprechermodell gehört, und Vergleichen der Trefferwahrscheinlichkeit, die für das Sprechermodell bestimmt ist, mit der Trefferwahrscheinlichkeits-Verteilung, die für das Sprechermodell erwartet wird, umfasst.

4. Verfahren nach einem der Ansprüche 2 oder 3, wobei das Abschätzen der Verteilung von Trefferwahrscheinlichkeiten weiterhin mindestens eine Länge der Redeäußerung und ein Signal-zu-Rausch-Verhältnis der Redeäußerung berücksichtigt.

5. Verfahren nach einem der voranstehenden Ansprüche, wobei das Bestimmen der Wahrscheinlichkeit für ein bestimmtes Sprechermodell umfasst:

- Vergleichen der Trefferwahrscheinlichkeit für das Sprechermodell unter Berücksichtigung einer Verteilung von Trefferwahrscheinlichkeiten für das bestimmte Sprechermodell, die für den Fall erwartet werden, dass der berücksichtigte Sprecher der Verursacher der Redeäußerung ist, wobei die Verteilung von Trefferwahrscheinlichkeiten basierend auf der Vorkenntnis bestimmt wird;
- Vergleichen der Trefferwahrscheinlichkeiten für die übrig bleibenden Sprechermodelle jeweils mit einer Verteilung von Trefferwahrscheinlichkeiten, die für den Fall erwartet werden, dass der übrig bleibende Sprecher nicht der Verursacher der Redeäußerung ist, wobei die Verteilung von Trefferwahrscheinlichkeiten für die übrig bleibenden Sprecher auf der Vorkenntnis basieren, und
- Bestimmen der Wahrscheinlichkeit für das bestimmte Sprechermodell basierend auf den Vergleichen.

6. Verfahren nach einem der voranstehenden Ansprüche, wobei das Bestimmen der Wahrscheinlichkeit für ein Sprechermodell weiterhin eine Übergangswahrscheinlichkeit für einen Übergang zwischen dem entsprechenden Sprecher zu einem Sprecher einer vorausgehenden und/oder nachfolgenden Redeäußerung berücksichtigt.

7. Verfahren nach Anspruch 6, wobei die Übergangswahrscheinlichkeit mindestens eines der folgenden berücksichtigt: eine Änderung einer Richtung, aus der aufeinanderfolgende Redeäußerungen stammen, ein Ausschalten oder ein Neustart des Spracherkennungssystems zwischen aufeinander folgenden Redeäußerungen, ein Zeitversatz von angrenzenden Redeäußerungen und eine Detektion einer Änderung eines Benutzers des Spracherkennungssystems.

8. Verfahren nach einem der voranstehenden Ansprüche, wobei das Bestimmen der Trefferwahrscheinlichkeit für ein Sprechermodell für die Redeäußerung auf Trefferwahrscheinlichkeiten einer Klassifizierung von Merkmalsvektoren, die aus der Redeäußerung auf das Sprechermodell extrahiert werden, basiert, wobei die Klassifizierung für mindestens ein Sprechermodell darin resultiert, dass dieses in einem darauffolgenden Spracherkennungsschritt verwendet wird.

9. Verfahren nach Anspruch 8, wobei die Redeäußerung kontinuierlich prozessiert wird, wobei das Klassifizierungsergebnis des Sprechermodells, das die höchste mittlere Trefferwahrscheinlichkeit für eine vorbestimmte Anzahl von Merkmalsvektoren ergibt, dem Spracherkennungsschritt bereitgestellt wird.

10. Verfahren nach einem der voranstehenden Ansprüche, wobei die Redeäußerung Teil einer Sequenz von Redeäußerungen ist, und wobei die Wahrscheinlichkeit für jede Redeäußerung in dieser Sequenz bestimmt wird, wobei das Verfahren weiterhin den Schritt umfasst:

- Bestimmen einer Sequenz von Sprechern mit der höchsten Wahrscheinlichkeit der Zugehörigkeit zu der Sequenz der Redeäußerungen, wobei das Bestimmen auf den Wahrscheinlichkeiten, die für die Sprechermodelle für die Redeäußerungen bestimmt sind, basiert,

wobei jede Wahrscheinlichkeit für ein Sprechermodell für eine Redeäußerung eine Übergangswahrscheinlichkeit für einen Übergang zu einem Sprecher einer vorhergehenden Redeäußerung und/oder einen Sprecher einer nachfolgenden Redeäußerung berücksichtigt.

11. Verfahren nach Anspruch 10, wobei die wahrscheinlichste Sequenz von Sprechern, die zu der Sequenz von Redeäußerungen gehört, unter Verwendung eines Viterbi-Such-Algorithmus basierend auf den Wahrscheinlichkeiten, die für die Sprechermodelle für die Redeäußerungen bestimmt sind, bestimmt wird.

12. Verfahren nach Anspruch 10, wobei die wahrscheinlichste Sequenz von Sprechern, die zu der Sequenz von Redeäußerungen gehört, unter Verwendung eines Vorwärts-Rückwärts Dekodieralgorithmus bestimmt wird.

13. Verfahren nach einem der Ansprüche 10-12, weiterhin umfassend den Schritt des Verwendens einer Redeäußerung aus der Sequenz von Redeäußerungen, um das Sprechermodell des Sprechers in der Sequenz von Sprechern, der zu der entsprechenden Redeäußerung gehört, zu trainieren.

**14.** Verfahren nach Anspruch 13, wobei das Training durchgeführt wird, nachdem die Sequenz der Sprecher für eine vorbestimmte Anzahl von aufeinanderfolgenden Redeäußerungen bestimmt ist, oder wenn die Wahrscheinlichkeit für ein Sprechermodell für eine Redeäußerung einen vorbestimmten Schwellenwert überschreitet.

**15.** Verfahren nach einem der voranstehenden Ansprüche, wobei das Vergleichen der Redeäußerung mit einer Vielzahl von Sprechermodellen eine Extraktion von Merkmalsvektoren aus der Redeäußerung umfasst, wobei das Verfahren weiterhin den Schritt des Einstellens der Merkmalsvektorextraktion in Übereinstimmung mit dem Sprechermodell, für das die höchste Wahrscheinlichkeit bestimmt ist, umfasst.

**16.** Verfahren nach einem der voranstehenden Ansprüche, wobei die Vielzahl von Sprechermodellen ein Standardsprechermodell umfasst, wobei die Bestimmung der Sprechermodellwahrscheinlichkeiten für die Redeäußerung auf Trefferwahrscheinlichkeiten für die Sprechermodelle, die durch eine Trefferwahrscheinlichkeit für das Standardsprechermodell normalisiert sind, basiert.

**17.** Verfahren nach einem der voranstehenden Ansprüche, wobei die Redeäußerung Teil einer Sequenz von Redeäußerungen ist und wobei die Wahrscheinlichkeit für jede Redeäußerung in der Sequenz bestimmt wird, wobei das Verfahren weiterhin die Schritte umfasst:

- für jede Redeäußerung, Bestimmen einer Wahrscheinlichkeit für einen nichtregistrierten Sprecher, für den kein Sprechermodell existiert, wobei die Wahrscheinlichkeit durch Annahme berechnet wird, dass keiner der Sprecher der Sprechermodelle die Redeäußerung verursacht hat;
- Bestimmen einer Sequenz von Sprechern mit der höchsten Wahrscheinlichkeit der Zugehörigkeit zu der Sequenz von Redeäußerungen, wobei die Bestimmung auf den Wahrscheinlichkeiten, die für die Redeäußerungen für die Sprechermodelle und für den nichtregistrierten Sprecher bestimmt sind, basiert,
- Erzeugen eines neuen Sprechermodells für den nichtregistrierten Sprecher, wenn der nichtregistrierte Sprecher in der Sequenz von Sprechern beinhaltet ist.

**18.** Verfahren nach einem der vorangehenden Ansprüche, weiterhin den Schritt des Generierens eines neuen Sprechermodells umfassend, wenn die Trefferwahrscheinlichkeiten für die Sprechermodelle unterhalb eines vorbestimmten Schwellenwerts liegen.

**19.** Verfahren nach einem der voranstehenden Ansprüche, wobei die Vielzahl von Sprechermodellen für mindestens einen Sprecher verschiedene Modelle für unterschiedliche Umgebungsbedingungen umfassen.

**20.** Spracherkennungssystem, welches eingerichtet ist, um einen Sprecher einer Redeäußerung zu erkennen, wobei das Spracherkennungssystem umfasst:

- eine Aufzeichnungseinheit (702), welche eingerichtet ist, um eine Redeäußerung aufzuzeichnen;
- eine Speichereinheit (701), welche eingerichtet ist, um eine Vielzahl von Sprechermodellen für verschiedene Sprecher zu speichern; und
- eine Rechnereinheit (709), welche eingerichtet ist, um die folgenden Schritte durchzuführen:

• Vergleichen der Redeäußerung mit der Vielzahl von Sprechermodellen;
• Bestimmen einer Trefferwahrscheinlichkeit für jedes Sprechermodell, wobei die Trefferwahrscheinlichkeit indiziert, wie gut das Sprechermodell mit der Redeäußerung zusammen gehört;
• für jedes Sprechermodell, Bestimmen einer Wahrscheinlichkeit, dass die Redeäußerung von dem Sprecher, der zu dem Sprechermodell gehört, stammt, wobei die Bestimmung der Wahrscheinlichkeit für ein Sprechermodell auf den Trefferwahrscheinlichkeiten für die Sprechermodelle basiert und eine Vorkenntnis über die Sprechermodelle berücksichtigt,

**dadurch gekennzeichnet, dass**
die Vorkenntnis für jedes Sprechermodell eine erwartete Verteilung von Trefferwahrscheinlichkeiten für einen bestimmten Trainingszustand des Sprechermodells umfasst, wobei der Trainingszustand die Anzahl von Redeäußerungen, gemäß denen das Sprechermodell angepasst wurde, indiziert; und
Berücksichtigen der Vorkenntnis Erhalten der Verteilung von Trefferwahrscheinlichkeiten, die für den Trainingszustand des Sprechermodells erwartet werden, und Vergleichen der bestimmten Trefferwahrscheinlichkeiten mit der erhaltenen Verteilung von Trefferwahrscheinlichkeiten, die für den Trainingszustand des Sprechermodells erwartet werden, umfasst.

21. Spracherkennungssystem gemäß Anspruch 20, wobei das Spracherkennungssystem eingerichtet ist, um das Verfahren nach einem der Ansprüche 1-19 durchzuführen.

22. Computerprogrammprodukt, das in den internen Speicher einer Computervorrichtung geladen werden kann, wobei das Produkt Softwarecode-Abschnitte umfasst zum Durchführen der Verfahren nach einem der Ansprüche 1-19, wenn das Produkt ausgeführt wird.

23. Elektronisch lesbarer Datenträger mit gespeicherter, elektronisch lesbarer Steuerinformation, die derart konfiguriert ist, dass, wenn der Datenträger in einer Computervorrichtung verwendet wird, die Steuerinformation das Verfahren nach einem der Ansprüche 1-19 durchführt.

**Revendications**

1. Procédé de reconnaissance d'un locuteur d'un énoncé (602) dans un système de reconnaissance vocale, comprenant

   - la comparaison de l'énoncé (602) à une pluralité de modèles de locuteur (604) pour différents locuteurs ;
   - la détermination d'un score de vraisemblance (606) pour chaque modèle de locuteur, le score de vraisemblance (606) indiquant à quel point le modèle de locuteur correspond à l'énoncé ; et
   - pour chaque modèle de locuteur (604), la détermination d'une probabilité (609) que l'énoncé (602) provienne du locuteur correspondant au modèle de locuteur (604),

   dans lequel la détermination de la probabilité (609) pour un modèle de locuteur (604) est basée sur les scores de vraisemblance (606) pour les modèles de locuteur et prend en compte une connaissance antérieure (607) concernant le modèle de locuteur, **caractérisé en ce que**
   la connaissance antérieure (607) pour chaque modèle de locuteur (604) comprend une distribution prévue de scores de vraisemblance pour un état d'apprentissage du modèle de locuteur (604), l'état d'apprentissage indiquant le nombre d'énoncés auxquels le modèle de locuteur a été adapté ; et
   la prise en compte de la connaissance antérieure (607) comprend l'extraction de la distribution de scores de vraisemblance prévue pour l'état d'apprentissage du modèle de locuteur (604) et la comparaison du score de vraisemblance déterminé à la distribution extraite de scores de vraisemblance prévue pour l'état d'apprentissage du modèle de locuteur (604).

2. Procédé selon la revendication 1, dans lequel la distribution de scores de vraisemblance prévue pour l'état d'apprentissage est estimée par un perceptron multicouche entraîné sur les distributions de scores de vraisemblance obtenues pour différents états d'apprentissage de modèles de locuteur, le perceptron multicouche retourne des paramètres de la distribution de scores de vraisemblance pour l'état d'apprentissage particulier donné.

3. Procédé selon l'une quelconque des revendications précédentes, dans lequel la prise en compte de la connaissance antérieure comprend l'estimation d'une distribution de scores de vraisemblance prévue pour le modèle de locuteur particulier ou pour le sexe du locuteur correspondant au modèle de locuteur et la comparaison du score de vraisemblance déterminé pour le modèle de locuteur à la distribution de scores de vraisemblance prévue pour ledit modèle de locuteur.

4. Procédé selon l'une quelconque des revendications 2 ou 3, dans lequel l'estimation de la distribution de scores de vraisemblance prend en compte en outre au moins l'un d'une longueur de l'énoncé et un rapport signal-sur-bruit de l'énoncé.

5. Procédé selon l'une quelconque des revendications précédentes, dans lequel la détermination de la probabilité pour un modèle de locuteur particulier comprend :

   - la comparaison du score de vraisemblance pour le modèle de locuteur en question à une distribution de scores de vraisemblance pour le modèle de locuteur particulier prévue dans le cas où le locuteur en question est à l'origine de l'énoncé, la distribution de scores de vraisemblance étant déterminée sur la base de la connaissance antérieure ;
   - la comparaison des scores de vraisemblance pour le modèle de locuteur restant chacun à une distribution de scores de vraisemblance prévue dans le cas où le locuteur restant n'est pas à l'origine de l'énoncé, la distribution de scores de vraisemblance pour les locuteurs restants étant basée sur la connaissance antérieure, et
- la détermination de la probabilité pour le modèle de locuteur particulier sur la base des comparaisons.

6. Procédé selon l'une quelconque des revendications précédentes, dans lequel la détermination de la probabilité pour un modèle de locuteur prend en compte en outre une probabilité de transition pour une transition entre le locuteur correspondant à un locuteur d'un énoncé précédent et/ou suivant.

7. Procédé selon la revendication 6, dans lequel la probabilité de transition prend en compte au moins l'un d'un changement d'une direction depuis laquelle des énoncés successifs proviennent, un arrêt ou redémarrage du système de reconnaissance vocale entre des énoncés successifs, un délai d'énoncés adjacents, et une détection d'un changement d'un utilisateur du système de reconnaissance vocale.

8. Procédé selon l'une quelconque des revendications précédentes, dans lequel la détermination du score de vraisemblance pour un modèle de locuteur pour l'énoncé est basée sur des scores de vraisemblance d'une classification de vecteurs de traits caractéristiques extraits de l'énoncé sur le modèle de locuteur, le résultat de classification pour au moins un modèle de locuteur étant utilisé dans une étape de reconnaissance vocale ultérieure.

9. Procédé selon la revendication 8, dans lequel l'énoncé est traité en continu, le résultat de classification du modèle de locuteur produisant le score de vraisemblance moyen le plus élevée pour un nombre prédéterminé de vecteurs de traits caractéristiques étant transmis à l'étape de reconnaissance vocale.

10. Procédé selon l'une quelconque des revendications précédentes, dans lequel l'énoncé fait partie d'une séquence d'énoncés, et dans lequel ladite probabilité est déterminée pour chaque énoncé dans ladite séquence, le procédé comprenant en outre l'étape de :

détermination d'une séquence de locuteurs ayant la probabilité la plus élevée de correspondre à la séquence d'énoncés, la détermination étant basée sur les probabilités déterminées pour les modèles de locuteur pour les énoncés, chaque probabilité pour un modèle de locuteur pour un énoncé prenant en compte une probabilité de transition pour une transition vers un locuteur d'un énoncé précédent et/ou un locuteur d'un énoncé suivant.

11. Procédé selon la revendication 10, dans lequel la séquence de locuteurs la plus probable correspondant à la séquence d'énoncés est déterminée en utilisant un algorithme de recherche de Viterbi basé sur les probabilités déterminées pour les modèles de locuteur pour les énoncés.

12. Procédé selon la revendication 10, dans lequel la séquence de locuteurs la plus probable correspondant à la séquence d'énoncés est déterminée en utilisant un algorithme de décodage avant-arrière.

13. Procédé selon l'une quelconque des revendications 10 à 12, comprenant en outre l'étape d'utilisation d'un énoncé de la séquence d'énoncés pour l'apprentissage du modèle de locuteur du locuteur dans la séquence de locuteurs correspondant à l'énoncé respectif.

14. Procédé de la revendication 13, dans lequel l'apprentissage est effectué après que ladite séquence de locuteurs soit déterminée pour un nombre prédéterminé d'énoncés successifs ou si la probabilité pour un modèle de locuteur pour un énoncé dépasse une valeur de seuil prédéterminée.

15. Procédé selon l'une quelconque des revendications précédentes, dans lequel la comparaison de l'énoncé à une pluralité de modèles de locuteur comprend une extraction de vecteurs de traits caractéristiques de l'énoncé, le procédé comprenant en outre l'étape d'adaptation de l'extraction de vecteur de traits caractéristiques en fonction du modèle de locuteur pour lequel la probabilité la plus élevée est déterminé.

16. Procédé selon l'une quelconque des revendications précédentes, dans lequel la pluralité de modèles de locuteur comprend un modèle de locuteur standard, la détermination des probabilités du modèle de locuteur pour l'énoncé étant basée sur des scores de vraisemblance pour les modèles de locuteur normalisés par un score de vraisemblance pour le modèle de locuteur standard.

17. Procédé selon l'une quelconque des revendications précédentes, dans lequel l'énoncé fait partie d'une séquence d'énoncés, et dans lequel ladite probabilité est déterminée pour chaque énoncé dans ladite séquence, le procédé comprenant en outre les étapes consistant à

- déterminer une probabilité pour un locuteur non enregistré, pour lequel il n'existe pas de modèle de locuteur, pour chaque énoncé, la probabilité étant calculée en supposant qu'aucun des locuteurs des modèles de locuteur n'est à l'origine de l'énoncé ;
- déterminer une séquence de locuteurs ayant la probabilité la plus élevée de correspondre à la séquence d'énoncés, la détermination étant basée sur les probabilités déterminées pour les énoncés pour les modèles de locuteur et pour le locuteur non enregistré,
- la génération d'un nouveau modèle de locuteur pour le locuteur non enregistré si le locuteur non enregistré est compris dans la séquence de locuteurs.

18. Procédé selon l'une quelconque des revendications précédentes, comprenant en outre l'étape de génération d'un nouveau modèle de locuteur si les scores de vraisemblance pour lesdits modèles de locuteur sont au-dessous d'une valeur de seuil prédéterminée.

19. Procédé selon l'une quelconque des revendications précédentes, dans lequel la pluralité de modèles de locuteur comprend pour au moins un locuteur différents modèles pour différentes conditions environnementales.

20. Système de reconnaissance vocale adapté pour reconnaître un locuteur d'un énoncé, le système de reconnaissance vocale comprenant:

- une unité d'enregistrement (702) adaptée pour enregistrer un énoncé ;
- une unité de mémoire (701) adaptée pour stocker une pluralité de modèles de locuteur pour différents locuteurs ; et
- une unité de traitement (709) adaptée pour exécuter les étapes suivantes :

- comparaison de l'énoncé à la pluralité de modèles de locuteur ;
- détermination d'un score de vraisemblance pour chaque modèle de locuteur, le score de vraisemblance indiquant à quel point le modèle de locuteur correspond à l'énoncé ;
- pour chaque modèle de locuteur, détermination d'une probabilité que l'énoncé provient du locuteur correspondant au modèle de locuteur, la détermination de la probabilité pour un modèle de locuteur étant basée sur les scores de vraisemblance pour les modèles de locuteur et prenant en compte la connaissance antérieure concernant le modèle de locuteur,

**caractérisé en ce que**
la connaissance antérieure pour chaque modèle de locuteur comprend une distribution prévue de scores de vraisemblance pour un état d'apprentissage particulier du modèle de locuteur, l'état d'apprentissage indiquant le nombre d'énoncés auxquels le modèle de locuteur a été adapté ; et
la prise en compte de la connaissance antérieure comprend l'extraction de la distribution de scores de vraisemblance prévue pour l'état d'apprentissage du modèle de locuteur et la comparaison du score de vraisemblance déterminé à la distribution extraite de scores de vraisemblance prévue pour l'état d'apprentissage du modèle de locuteur.

21. Système de reconnaissance vocale selon la revendication 20, le système de reconnaissance vocale étant adapté pour exécuter le procédé de l'une des revendications 1 à 19.

22. Produit de programme informatique qui peut être chargé dans la mémoire interne d'un dispositif informatique, ledit produit comprenant des parties de code logiciel pour conduire le procédé d'une des revendications 1 à 19 lorsque le produit est exécuté.

23. Support de données lisible de façon électronique avec des informations de commande lisibles de façon électronique configuré de sorte que lors de l'utilisation du support de données dans un dispositif informatique, les informations de commande conduisent le procédé d'une des revendications 1 à 19.

FIG. 1

START

99 — RECORD UTTERANCE

102 — EXTRACT FEATURE VECTORS FOR TIME FRAMES OF UTTERANCE

103 — CLASSIFY FEATURE VECTORS ON STANDARD CODEBOOK AND PLURAL SPEAKER SPECIFIC CODEBOOKS

104 — OBTAIN LIKELIHOOD SCORE FOR EACH CODEBOOK FOR EACH FEATURE VECTOR

105 — DETERMINE MOVING AVERAGE OF LIKELIHOOD SCORES OVER PREDETERMINED NUMBER OF FEATURE VECTORS FOR EACH CODEBOOK

106 — SUPPLY CLASSIFICATION RESULT OF BEST MATCHING CODEBOOK TO SPEECH RECOGNITION

107 — END OF UTTERANCE REACHED? — NO

YES

A

*FIG. 2*

**201** — DETERMINE LIKELIHOOD SCORE FOR EACH CODEBOOK FOR WHOLE UTTERANCE

**202** — RETRIEVE TRAINING STATUS OF CODEBOOKS

**203** — ESTIMATE EXPECTED LIKELIHOOD DISTRIBUTIONS FOR RETRIEVED TRAINING STATUS OF CODEBOOKS

**204** — DETERMINE TRANSITION PROBABILITY TO SPEAKER OF PRECEDING UTTERANCE

**205** — DETERMINE PROBABILITY FOR EACH SPEAKER TAKING TRAINING STATUS AND TRANSITION PROBABILITY INTO ACCOUNT

**206** — DETERMINE CODEBOOK HAVING THE HIGHEST PROBABILITY FOR THE UTTERANCE

**207** — ADAPT FEATURE EXTRACTION ACCORDING TO CORRESPONDING SPEAKER

*FIG. 3*

B

301 — RECORD FURTHER UTTERANCES

302 — PROCESS FURTHER UTTERANCES CORRESPONDINGLY

303 — PREDETERMINED NUMBER OF UTTERANCES REACHED?   NO

YES

304 — PERFORM FORWARD-BACKWARD DECODING ALGORITHM BASED ON DETERMINED PROBABILITIES FOR CODEBOOKS FOR SEQUENCE OF UTTERANCES

305 — DETERMINE SEQUENCE OF SPEAKERS HAVING THE HIGHES PROBABILITY OF CORRESPONDING TO SEQUENCE OF UTTERANCES

306 — TRAIN CODEBOOK OF SPEAKER WITH CORRESPONDING UTTERANCE

307 — CONTINUE THE RECORDING AND PROCESSING OF UTTERANCES

END

FIG. 4

401 — | RETRIEVE TRAINING STATUS OF CODEBOOKS |

402 — | ESTIMATE LIKELIHOOD DISTRIBUTION FOR EACH CODE BOOK BASED ON RETRIEVED TRAINING STATUS AND/OR SPEAKER SPECIFIC DISTRIBUTION FOR THE CASE THAT NONE OF THE REGISTERED SPEAKERS ORIGINATED THE UTTERANCE |

403 — | COMPARE DETERMINED LIKELIHOODS TO ESTIMATED LIKELIHOOD DISTRIBUTIONS AND DETERMINE NORMALIZED PROBABILITY FOR UNREGISTERED SPEAKER |

404 — | DETERMINE MOST PROBABLE SEQUENCE OF SPEAKERS BASED ON PROBABILITIES FOR REGISTERED SPEAKERS AND UNREGISTERED SPEAKER |

405 — ⟨ MOST PROBABLE SEQUENCE OF SPEAKERS COMPRISES THE UNREGISTERED SPEAKER? ⟩ — NO

YES

406 — | CREATE NEW CODEBOOK |

*FIG. 5*

FIG. 6

EP 2 216 775 B1

*FIG. 7*

distribution of competing speakers

log. likelihood difference

distribution of target speaker

——— Training on 10 utterances
——— Training on 20 utterances
········ Training on 50 utterances
—·—· Training on 140 utterances

log. likelihood difference

*FIG. 8*

FIG. 9

EP 2 216 775 B1

EP 2 216 775 B1

*FIG. 10*

EP 2 216 775 B1

time →

Speaker-ID

$$p(i_{t-2}|i_{t-3} \cdot l_0(x_{t-2}), \ldots, l_N(x_{t-2}))$$

$$p(i_1, \ldots, i_t|l_{i_1}(x_1), \ldots, l_{i_t}(x_t))$$

*FIG. 11*

**FIG. 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10209324 C1

**Non-patent literature cited in the description**

- **SHOU-CHUN YIN et al.** Adaptive score normalization for progressive model adaptation in text independent speaker verification. *ACOUSTICS, SPEECH AND SIGNAL PROCESSING, 2008. ICASSP 2008. IEEE INTERNATIONAL CONFERENCE ON, IEEE, PISCATAWAY,* 31 March 2008, ISBN 978-1-4244-1483-3, 4857-4860
- **ARTHUR DEMPSTER ; NAN LAIRD ; DONALD RUBIN.** Maximum Likelihood From Incomplete Data via the EM Algortihm. *Journal of the Royal Statistical Society, Series B,* 1977, vol. 39 (1), 138
- **FRANK DELLAERT.** *The Expectation Maximization Algorithm, Tutorial,* 2002, http://www.cc.gatech.edu/dellaert/em-paper.pdf
- **DOUGLAS A. REYNOLDS ; RICHARD C. ROSE.** Robust Text-Independent Speaker Identification Using Gaussian Mixture Speaker Models. *IEEE Transactions on Speech and audio Processing,* 1995, vol. 3 (1